# EUROPEAN PATENT APPLICATION

(11) **EP 4 797 645 A1**
(43) Date of publication of application: **26.08.2026**
(21) Application number: 24890676.0
(22) Date of filing: 12.11.2024
(51) Int. Cl.: H04L 41/5067

(54) **COMMUNICATION METHOD, APPARATUS AND SYSTEM**

(30) Priority: 13.11.2023 CN 202311515280
(71) Applicant: HUAWEI TECHNOLOGIES CO., LTD., Shenzhen, Guangdong 518129 (CN)
(72) Inventor: ZHANG, Kuan, Shenzhen, Guangdong 518129 (CN)
(74) Representative: Gill Jennings & Every LLP
(86) International application number: PCT/CN2024/131628
(87) International publication number: WO 2025/103321

(57) **Abstract**

Embodiments of this application disclose a communication method, apparatus, and system in the field of communication technologies, enabling the generation of QoS policies new businesses in communication networks. The method includes: A policy control function network element obtains requirement information of a first service and task information, where the task information includes related information of a task obtained by decomposing and mapping the first service. The policy control function network element generates QoS parameters for the first service based on the requirement information of the first service, and then generates QoS parameters for the task based on the QoS parameters of the first service and the task information.

## Description

This application claims priority to Chinese Patent Application No. 202311515280.5, filed with the China National Intellectual Property Administration on November 13, 2023 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

With the development of communication technologies, there is growing interest in introducing new types of businesses, such as artificial intelligence (artificial intelligence, Al) related businesses and sensing businesses, into wireless communication networks. To support these new businesses, networks must be capable of efficiently coordinating and scheduling heterogeneous resources in a plurality of dimensions such as connection, computing, data, and models (or algorithms). However, the quality of service (quality of service, QoS) mechanism in 5th generation (5th generation, 5G) wireless communication networks is designed based on a protocol data unit (protocol data unit, PDU) session, focusing primarily on ensuring communication connection quality. This approach is no longer applicable to wireless communication networks that incorporate these new businesses.

Therefore, a key challenge lies in how to ensure QoS for these new businesses in wireless communication networks.

### SUMMARY

Embodiments of this application provide a communication method, apparatus, and system that facilitate the generation of QoS policies for new businesses in wireless communication networks, thereby ensuring their QoS.

The following technical solutions are used in embodiments of this application.

According to a first aspect, a communication method is provided. The method may be performed by a policy control function network element, or may be performed by a component (for example, a processor, a chip, or a chip system) of the policy control function network element, or may be implemented by a logical module or software that can implement all or a part of functions of the policy control function network element. The following uses an example in which the method is performed by the policy control function network element for description. The method includes: The policy control function network element obtains requirement information of a first service and task information, where the task information includes related information of a task obtained by decomposing and mapping the first service. The policy control function network element generates QoS parameters of the first service based on the requirement information of the first service. Further, the policy control function network element generates QoS parameters of the task based on the QoS parameters of the first service and the task information.

According to the communication method provided in this embodiment of this application, the policy control function network element may generate service-level QoS parameters, and then further generate task-level QoS parameters. This is applicable to a communication network that performs management at a task granularity, to ensure quality of service of the first service. Therefore, the communication method provided in this embodiment of this application supports generation of a QoS policy of a new business in the communication network.

In a possible design, that the policy control function network element obtains the requirement information of the first service includes: The policy control function network element obtains related information of the first service, where the related information of the first service includes one or more of the following: the requirement information of the first service or identification information of the first service, and there is a mapping relationship between the identification information of the first service and the requirement information of the first service.

Based on this solution, the policy control function network element may obtain the requirement information of the first service by using the identification information of the first service, to reduce signaling overheads.

In a possible design, the identification information of the first service includes at least one of the following: information about a user that triggers the first service, information about a terminal device related to the first service, or information about an application service provider.

This solution provides a plurality of types of identification information of the first service, and is applicable to different scenarios.

In a possible design, that the policy control function network element generates the QoS parameters of the first service based on the requirement information of the first service includes: The policy control function network element generates, based on the related information of the first service, a QoS template corresponding to the first service, where the QoS template includes a mapping relationship between the QoS parameters of the first service and the identification information of the first service.

Based on this solution, the policy control function network element may establish the mapping relationship between the QoS parameters of the first service and the identification information of the first service. If another network element obtains the identification information of the first service, the another network element may obtain the QoS parameters of the first service based on the mapping relationship.

In a possible design, the QoS parameters of the first service include a plurality of sets of QoS parameters, and each set of QoS parameters has a different priority.

Based on this solution, a set of QoS parameters that are actually applied can be flexibly selected based on the priority of each set of QoS parameters.

In a possible design, the method further includes: The policy control function network element sends the QoS parameters of the first service to a unified data repository network element.

Based on this solution, the policy control function network element may store the QoS parameters of the first service in the unified data repository network element, to facilitate reading by the policy control function network element or another network element.

In a possible design, the task information includes at least one of the following: deployment information or topology information of the task.

Based on this solution, the policy control function network element may obtain the deployment information and/or the topology information of the task, to help the policy control function network element generate appropriate QoS parameters for the task.

In a possible design, that the policy control function network element generates the QoS parameters of the task based on the QoS parameters of the first service and the task information includes: The policy control function network element generates a policy and charging control rule based on the QoS parameters of the first service and the task information, where the policy and charging control rule includes the QoS parameters of the task and a mapping relationship between the QoS parameters of the task and at least one of a task data flow or an execution network element that executes the task.

Based on this solution, when generating the QoS parameters of the task, the policy control function network element may bind the QoS parameters of the task to at least one of the execution network element or the task data flow, to facilitate QoS management.

In a possible design, the policy and charging control rule includes at least one of the following: information about a connection-related specific QoS requirement, an identifier indicating the connection-related specific QoS requirement, information about an execution network element serving as a transmission start point of a service data flow of the task, and information about an execution network element serving as a transmission end point of the service data flow of the task.

Based on this solution, connection-related content that may be included in the policy and charging control rule is provided, so that QoS management can be performed on a connection dimension of the task based on the policy and charging control rule.

In a possible design, the policy and charging control rule further includes a type of the service data flow of the task, and the type of the service data flow includes a computing type, a data type, or an algorithm type.

Based on this solution, for a plurality of dimensions related to the task, service data flows of the task may also be classified into different types, so that QoS management is performed on the service data flows of the task based on the types.

In a possible design, the policy and charging control rule includes at least one of the following: information about a computing-related specific QoS requirement, an identifier indicating the computing-related specific QoS requirement, information about an execution network element for performing a computing function, an identifier of a computing subtask, and a computing type of the computing subtask.

Based on this solution, computing-related content that may be included in the policy and charging control rule is provided, so that QoS management can be performed on a computing dimension of the task based on the policy and charging control rule.

In a possible design, the policy and charging control rule includes at least one of the following: information about a data-related specific QoS requirement, an identifier indicating the data-related specific QoS requirement, a data type, and a data scale.

Based on this solution, data-related content that may be included in the policy and charging control rule is provided, so that QoS management can be performed on a data dimension of the task based on the policy and charging control rule.

In a possible design, the policy and charging control rule includes at least one of the following: information about an algorithm-related specific QoS requirement, an identifier indicating the algorithm-related specific QoS requirement, an algorithm type, an algorithm level, and an application manner.

Based on this solution, algorithm-related content that may be included in the policy and charging control rule is provided, so that QoS management can be performed on an algorithm dimension of the task based on the policy and charging control rule.

In a possible design, the method further includes: The policy control function network element sends the QoS parameters of the task to an anchor network element, where the QoS parameters of the task are used by the anchor network element to generate resource-level QoS parameters. The resource-level QoS parameters include at least one of the following: the connection dimension, the computing dimension, the data dimension, and the algorithm dimension.

Based on this solution, the anchor network element may obtain the QoS parameters of the task, and further generate the resource-level QoS parameters, so that the anchor network element can directly perform QoS management on resources in four dimensions based on the resource-level QoS parameters.

According to a second aspect, a communication method is provided. The method may be performed by an anchor network element, or may be performed by a component (for example, a processor, a chip, or a chip system) of the anchor network element, or may be implemented by a logical module or software that can implement all or a part of functions of the anchor network element. The following uses an example in which the method is performed by the anchor network element for description. The method includes: The anchor network element obtains QoS parameters of a task, and generates resource-level QoS parameters based on the QoS parameters of the task and an execution network element that executes the task, where the resource-level QoS parameters include a parameter in at least one of the following dimensions: a connection dimension, a computing dimension, a data dimension, and an algorithm dimension. The anchor network element sends the resource-level QoS parameters to the execution network element.

According to the communication method provided in this embodiment of this application, the anchor network element may generate the resource-level QoS parameters including four dimensions, to directly perform QoS management on the four dimensions. This is applicable to a new business that needs to coordinate resources in the four dimensions in a communication network. Therefore, the communication method provided in this embodiment of this application supports generation of a QoS policy of the new business in the communication network.

In a possible design, the task is obtained by decomposing and mapping a first service, and the QoS parameters of the task are obtained based on QoS parameters of the first service.

Based on this solution, decomposition and mapping from a service to a task and then from the task to a resource can be implemented.

In a possible design, the method further includes: The anchor network element obtains an orchestration result of the task, where the orchestration result includes template description information and a dependency relationship of the task. The anchor network element obtains task information based on the orchestration result, where the task information includes at least one of the following: deployment information or topology information of the task.

In a possible design, the method further includes: The anchor network element sends the task information to a policy control function network element, where the task information is used by the policy control function network element to generate the QoS parameters of the task.

Based on this solution, the anchor network element may send the obtained task information to the policy control function network element, so that the policy control function network element generates the QoS parameters of the task.

In a possible design, that the anchor network element obtains the quality of service QoS parameters of the task includes: The anchor network element obtains a policy and charging control rule, where the policy and charging control rule includes the QoS parameters of the task and a mapping relationship between the QoS parameters of the task and at least one of a task data flow or an execution network element that executes the task.

Based on this solution, the anchor network element may obtain the mapping relationship between the QoS parameters of the task and at least one of the execution network element or the task data flow, so that the anchor network element generates the resource-level QoS parameters based on the mapping relationship.

In a possible design, the policy and charging control rule includes at least one of the following: information about a connection-related specific QoS requirement, an identifier indicating the connection-related specific QoS requirement, information about an execution network element serving as a transmission start point of a service data flow of the task, and information about an execution network element serving as a transmission end point of the service data flow of the task.

Based on this solution, connection-related content that may be included in the policy and charging control rule is provided, so that the anchor network element can generate QoS parameters in a connection dimension based on the policy and charging control rule.

In a possible design, the policy and charging control rule further includes a type of the service data flow of the task, and the type of the service data flow includes a computing type, a data type, or an algorithm type.

Based on this solution, for a plurality of dimensions related to the task, service data flows of the task may also be classified into different types, so that QoS management is performed on the service data flows of the task based on the types.

In a possible design, the QoS parameters in the connection dimension include at least one of the following: the information about the connection-related specific QoS requirement, the identifier indicating the connection-related specific QoS requirement, and a packet identification rule, where the packet identification rule is used to distinguish between service data flows corresponding to different QoS requirements.

Based on this solution, content that may be included in the QoS parameters in the connection dimension is provided, and QoS management in the connection dimension may be performed based on the QoS parameters in the connection dimension.

In a possible design, the policy and charging control rule includes at least one of the following: information about a computing-related specific QoS requirement, an identifier indicating the computing-related specific QoS requirement, information about an execution network element for performing a computing function, an identifier of a computing subtask, and a computing type of the computing subtask.

Based on this solution, computing-related content that may be included in the policy and charging control rule is provided, so that the anchor network element can generate QoS parameters in a computing dimension based on the policy and charging control rule.

In a possible design, the QoS parameters in the computing dimension include at least one of the following: the information about the computing-related specific QoS requirement, the identifier indicating the computing-related specific QoS requirement, and a computing subtask identification rule, where the computing subtask identification rule is used to distinguish between computing subtasks corresponding to different QoS requirements.

Based on this solution, content that may be included in the QoS parameters in the computing dimension is provided, and QoS management in the computing dimension may be performed based on the QoS parameters in the computing dimension.

In a possible design, the policy and charging control rule includes at least one of the following: information about a data-related specific QoS requirement, an identifier indicating the data-related specific QoS requirement, a data type, and a data scale.

Based on this solution, data-related content that may be included in the policy and charging control rule is provided, so that the anchor network element can generate the QoS parameters in the data dimension based on the policy and charging control rule.

In a possible design, the QoS parameters in the data dimension include at least one of the following: the information about the data-related specific QoS requirement, the identifier indicating the data-related specific QoS requirement, and a data subtask identification rule, where the data subtask identification rule is used to distinguish between data subtasks corresponding to different QoS requirements.

Based on this solution, content that may be included in the QoS parameters in the data dimension is provided, and QoS management in the data dimension may be performed based on the QoS parameters in the data dimension.

In a possible design, the policy and charging control rule includes at least one of the following: information about an algorithm-related specific QoS requirement, an identifier indicating the algorithm-related specific QoS requirement, an algorithm type, an algorithm level, and an application manner.

Based on this solution, algorithm-related content that may be included in the policy and charging control rule is provided, so that the anchor network element can generate QoS parameters in an algorithm dimension based on the policy and charging control rule.

In a possible design, the QoS parameters in the algorithm dimension include at least one of the following: the information about the algorithm-related specific QoS requirement, the identifier indicating the algorithm-related specific QoS requirement, and an algorithm subtask identification rule, where the algorithm subtask identification rule is used to distinguish between algorithm subtasks corresponding to different QoS requirements.

Based on this solution, content that may be included in the QoS parameters in the algorithm dimension is provided, and QoS management in the algorithm dimension may be performed based on the QoS parameters in the algorithm dimension.

In a possible design, the method further includes: The anchor network element receives notification information from the execution network element, where the notification information is used to notify that the execution network element fails to meet a connection-, computing-, data-, or algorithm-related QoS requirement.

Based on this solution, the anchor network element may determine, based on a notification of the execution network element, which execution network element fails to meet the corresponding QoS requirement, so that a policy can be adjusted accordingly, to ensure that the QoS requirement can be met.

According to a third aspect, a communication method is provided. The method may be performed by an execution network element, or may be performed by a component (for example, a processor, a chip, or a chip system) of the execution network element, or may be implemented by a logical module or software that can implement all or a part of functions of the execution network element. The following uses an example in which the method is performed by the execution network element for description. The method includes: The execution network element obtains resource-level QoS parameters, where the resource-level QoS parameters include a parameter in at least one of the following dimensions: a connection dimension, a computing dimension, a data dimension, and an algorithm dimension. The execution network element executes a task based on the resource-level QoS parameters.

According to the communication method provided in this embodiment of this application, when executing the task based on the obtained resource-level QoS parameters, the execution network element may perform targeted processing on resources in four dimensions, to provide four-dimensional QoS management for a new business in a communication network.

In a possible design, the resource-level QoS parameters are obtained based on QoS parameters of the task, the task is obtained by decomposing and mapping a first service, and the QoS parameters of the task are obtained based on QoS parameters of the first service.

Based on this solution, decomposition and mapping from a service to a task and then from the task to a resource can be implemented.

In a possible design, QoS parameters in the connection dimension include at least one of the following: information about a connection-related specific QoS requirement, an identifier indicating the connection-related specific QoS requirement, and a packet identification rule, where the packet identification rule is used to distinguish between service data flows corresponding to different QoS requirements.

Based on this solution, content that may be included in the QoS parameters in the connection dimension is provided, and QoS management in the connection dimension may be performed based on the QoS parameters in the connection dimension.

In a possible design, QoS parameters in the computing dimension include at least one of the following: information about a computing-related specific QoS requirement, an identifier indicating the computing-related specific QoS requirement, and a computing subtask identification rule, where the computing subtask identification rule is used to distinguish between computing subtasks corresponding to different QoS requirements.

Based on this solution, content that may be included in the QoS parameters in the computing dimension is provided, and QoS management in the computing dimension may be performed based on the QoS parameters in the computing dimension.

In a possible design, QoS parameters in the data dimension include at least one of the following: information about a data-related specific QoS requirement, an identifier indicating the data-related specific QoS requirement, and a data subtask identification rule, where the data subtask identification rule is used to distinguish between data subtasks corresponding to different QoS requirements.

Based on this solution, data-related content that may be included in a policy and charging control rule is provided, so that the anchor network element can generate the QoS parameters in the data dimension based on the policy and charging control rule.

In a possible design, QoS parameters in the algorithm dimension include at least one of the following: information about an algorithm-related specific QoS requirement, an identifier indicating the algorithm-related specific QoS requirement, and an algorithm subtask identification rule, where the algorithm subtask identification rule is used to distinguish between algorithm subtasks corresponding to different QoS requirements.

Based on this solution, content that may be included in the QoS parameters in the algorithm dimension is provided, and QoS management in the algorithm dimension may be performed based on the QoS parameters in the algorithm dimension.

In a possible design, the method further includes: The execution network element sends notification information to an anchor network element, where the notification information is used to notify that the execution network element fails to meet a connection-, computing-, data-, or algorithm-related QoS requirement.

Based on this solution, the execution network element may notify the anchor network element that the execution network element fails to meet the corresponding QoS requirement, so that the anchor network element can adjust the policy accordingly.

According to a fourth aspect, a communication method is provided. The method may be performed by a task orchestration network element, or may be performed by a component (for example, a processor, a chip, or a chip system) of the task orchestration network element, or may be implemented by a logical module or software that can implement all or a part of functions of the task orchestration network element. The following uses an example in which the method is performed by the task orchestration network element for description. The method includes: The task orchestration network element obtains QoS parameters of a first service. The task orchestration network element performs task orchestration based on the QoS parameters of the first service, to obtain an orchestration result at a task granularity, where the orchestration result includes template description information and a dependency relationship of a task obtained by decomposing and mapping the first service.

According to the communication method provided in this embodiment of this application, the task orchestration network element may orchestrate the task obtained by decomposing and mapping the first service, to obtain the orchestration result at the task granularity. This is applicable to task orchestration of a new business, especially a complex new business, in a communication network, to implement hierarchical service-to-task QoS management.

In a possible design, the method further includes: The task orchestration network element sends the orchestration result to an anchor network element, where the orchestration result is used by the anchor network element to obtain task information, and the task information includes at least one of the following: deployment information or topology information of the task.

Based on this solution, the task orchestration network element may send the anchor network element to the anchor network element, to obtain the task information, and the task information may be used to assist the anchor network element in performing QoS management at the task granularity.

In a possible design, that the task orchestration network element obtains the QoS parameters of the first service includes: The task orchestration network element obtains a QoS template corresponding to the first service, where the QoS template includes a mapping relationship between the QoS parameters of the first service and identification information of the first service.

Based on this solution, the task orchestration network element may obtain the mapping relationship between the QoS parameters of the first service and the identification information of the first service. If the task orchestration network element subsequently obtains the identification information of the first service, the task orchestration network element may determine the QoS parameters of the first service based on the mapping relationship.

In a possible design, the QoS parameters of the first service include a plurality of sets of QoS parameters, and each set of QoS parameters has a different priority.

Based on this solution, a set of QoS parameters that are actually applied can be flexibly selected based on the priority of each set of QoS parameters.

In a possible design, that the task orchestration network element obtains the QoS parameters of the first service, and performs task orchestration based on the QoS parameters of the first service includes: The task orchestration network element obtains QoS parameters of a first priority of the first service, and performs task orchestration based on the QoS parameters of the first priority. If orchestration performed based on the QoS parameters of the first priority fails, the method further includes: The task orchestration network element obtains QoS parameters of a second priority of the first service, and performs task orchestration based on the QoS parameters of the second priority.

Based on this solution, the task orchestration network element may first perform task orchestration based on the QoS parameters of the first priority, and if orchestration fails, attempt to perform orchestration again based on the QoS parameters of the second priority. This avoids a case in which an orchestration result cannot be obtained because no more orchestration is performed due to a failure of initial orchestration.

According to a fifth aspect, a communication apparatus is provided to implement the foregoing methods. The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

In some possible designs, the communication apparatus may include a transceiver module and a processing module. The transceiver module may also be referred to as a transceiver unit, and is configured to implement a sending and/or receiving function in any one of the first aspect, the second aspect, the third aspect, or the fourth aspect and the possible implementations thereof. The transceiver module may include a transceiver circuit, a transceiver machine, a transceiver, or a communication interface. The processing module may be configured to implement a processing function in any one of the first aspect, the second aspect, the third aspect, or the fourth aspect and the possible implementations thereof.

In some possible designs, the transceiver module includes a sending module and a receiving module, which are respectively configured to implement sending and receiving functions in any one of the first aspect, the second aspect, the third aspect, or the fourth aspect and the possible implementations thereof.

According to a sixth aspect, a communication apparatus is provided, including a processor and a communication interface. The communication interface is configured to communicate with a module other than the communication apparatus. The processor is configured to execute a computer program or instructions, so that the communication apparatus performs the method in any one of the foregoing aspects.

According to a seventh aspect, a communication apparatus is provided, including at least one processor. The processor is configured to execute a computer program or instructions stored in a memory, so that the communication apparatus performs the method in any one of the foregoing aspects. In a possible implementation, the memory may be coupled to the processor, or may be independent of the processor. In a possible implementation, the communication apparatus further includes a memory. Optionally, the memory is integrated with the processor.

In the fifth aspect to the seventh aspect, the communication apparatus may be the policy control function network element in the first aspect or any implementation of the first aspect, an apparatus including the policy control function network element, or an apparatus included in the policy control function network element, for example, a chip. Alternatively, the communication apparatus may be the anchor network element in the second aspect or any implementation of the second aspect, an apparatus including the anchor network element, or an apparatus included in the anchor function network element, for example, a chip. Alternatively, the communication apparatus may be the execution network element in the third aspect or any implementation of the third aspect, an apparatus including the execution network element, or an apparatus included in the execution network element, for example, a chip. Alternatively, the communication apparatus may be the task orchestration network element in the fourth aspect or any implementation of the fourth aspect, an apparatus including the task orchestration network element, or an apparatus included in the task orchestration network element, for example, a chip or a chip system.

According to an eighth aspect, a computer-readable storage medium is provided. The computer-readable storage medium stores a computer program or instructions. When the computer program or the instructions are run on a communication apparatus, the communication apparatus is enabled to perform the method in any one of the foregoing aspects or any implementation thereof.

According to a ninth aspect, a computer program product including instructions is provided. When the computer program product runs on a communication apparatus, the communication apparatus is enabled to perform the method in any one of the foregoing aspects or any implementation thereof.

According to a tenth aspect, a communication apparatus is provided (for example, the communication apparatus may be a chip or a chip system). The communication apparatus includes a processor, configured to implement the functions in any one of the foregoing aspects or any implementation thereof.

In some possible designs, the communication apparatus includes a memory, and the memory is configured to store necessary program instructions and data.

In some possible designs, when the apparatus is a chip system, the apparatus may include a chip, or may include a chip and another discrete device.

It may be understood that when the communication apparatus provided in any one of the fifth aspect to the seventh aspect is a chip, the foregoing sending action/function may be understood as outputting, and the foregoing receiving action/function may be understood as inputting.

For technical effect brought by any implementation of the fifth aspect to the tenth aspect, refer to the technical effect brought by the corresponding implementation of the first aspect to the fourth aspect. Details are not described herein.

It should be noted that various possible implementations of any one of the foregoing aspects may be combined provided that the solutions are not contradictory.

According to an eleventh aspect, a communication system is provided. The communication system includes a policy control function network element that performs the method according to the first aspect, an anchor network element that performs the method according to the second aspect, and an execution network element that performs the method according to the third aspect.

In some possible designs, the communication system may further include a task orchestration network element that performs the method according to the fourth aspect.

### BRIEF DESCRIPTION OF DRAWINGS

FIG. 1 is a diagram of an architecture of a communication system according to an embodiment of this application;
FIG. 2 is a diagram of an architecture of a core network of a communication system according to an embodiment of this application;
FIG. 3 is a diagram of a protocol stack according to an embodiment of this application;
FIG. 4 is a diagram of a communication method according to an embodiment of this application;
FIG. 5 is a diagram of another communication method according to an embodiment of this application;
FIG. 6 is a diagram of another communication method according to an embodiment of this application;
FIG. 7 is a diagram of another communication method according to an embodiment of this application;
FIG. 8A and FIG. 8B are a possible schematic flowchart according to an embodiment of this application;
FIG. 9 is another possible schematic flowchart according to an embodiment of this application;
FIG. 10 is another possible schematic flowchart according to an embodiment of this application;
FIG. 11 is another possible schematic flowchart according to an embodiment of this application;
FIG. 12 is another possible schematic flowchart according to an embodiment of this application;
FIG. 13 is a diagram of an end-to-end connected architecture according to an embodiment of this application;
FIG. 14 is a diagram of composition of a communication apparatus according to an embodiment of this application; and
FIG. 15 is a diagram of a hardware structure of a communication apparatus according to an embodiment of this application.

### DESCRIPTION OF EMBODIMENTS

For ease of understanding the technical solutions in embodiments of this application, the following first briefly describes related technologies in embodiments of this application.

### 1. New businesses in a communication network

With the development of communication technologies, there is growing interest in introducing new types of businesses, such as AI-related businesses and sensing businesses, into wireless communication networks (a 5G post-evolved network like a 6th generation (6th generation, 6G) network). With introduction of these new businesses, some new services may emerge. For example, in a new AI-related business, AI is also used as a service (in this specification, "Al as a service" may be referred to as an "Al service" for short), and AI services such as model training, model inference, and model verification may be provided. In a sensing business, a device having a sensing capability may sense a feature of a target by receiving and sending signals, and may provide sensing services such as high-precision positioning, high-resolution imaging, parameter measurement, gesture/action identification, and vital sign monitoring. For another example, the 6G network may further provide services such as a computing service (for example, computing offloading) and a data service (for example, data collection or data reprocessing).

To support these new businesses and new services, networks must be capable of coordinating and scheduling heterogeneous resources in four dimensions. The four dimensions are respectively connection, computing, data, and models (or algorithms). In this specification, the "dimension" may also be referred to as an "element".

At a network layer, a process of completing a specific target through multi-dimensional resource coordination may be defined as a "task". In a task-centric architecture, a task anchor (task anchor, TA) and a task executor (task executor, TE) are introduced. The TA is responsible for life cycle management of the task, for example, is responsible for deployment, startup, deletion, modification, or monitoring of the task, and regulates resources in the four dimensions for the task. The TE is responsible for specific execution of the task, and performs data interaction in business logic. Based on the TA and the TE, a task processing procedure may be as follows: After triggering a task, a task trigger source sends a task request to the TA, and the TA deploys the task to one or more TEs for execution.

In a possible scenario, a task scheduler (task scheduler, TS) may be further introduced. The TS is mainly responsible for functions such as task control, establishment and maintenance of task context information, real-time sensing of a network status change, and four-dimensional resource coordination and scheduling.

To implement business decoupling, a TA and a TE may be independently deployed in a core network (core network, CN) and a radio access network (radio access network, RAN). For example, on a core network side, a task control function (task control function, TCF) network element may provide a TA function, and a task process function (task process function, TPF) network element may provide a TE function. On an access network side, a cluster node (cluster Node, cNode) may provide the TA function, and a service node (service Node, sNode) may provide the TE function.

In addition, in a possible scenario, a terminal device may also provide the TE function.

In a possible scenario, an entity that provides the TE function may also provide a TS function. For example, the TPF, the sNode, or the terminal device may provide both the TE function and the TS function.

Based on the four dimensions: data, computing, algorithm, and connection, a task may be split into dimension-level subtasks. Based on this, when deploying the task, the TA may deploy a dimension-level subtask to the TE for execution. It may be understood that, because the connection dimension of the task includes a connection path between TEs that execute different subtasks, and does not need to be specifically executed by a TE, there is no subtask in the connection dimension. Therefore, a task may be split into a subtask in the data dimension (referred to as a data subtask for short below), a subtask in the computing dimension (referred to as a computing subtask for short below), and a subtask in the algorithm dimension (referred to as an algorithm subtask for short below). There may be one or more subtasks of each type.

In a possible scenario, that the TE executes the dimension-level subtask may also be referred to as that the TE executes a corresponding function. For example, that the TE executes the computing subtask may also be referred to as that the TE executes a computing function.

In a possible implementation, for the four dimensions: connection, computing, data, and algorithms, different modules in the network element that provides the TA function may be responsible for resources in different dimensions. For example, a data control (data controller, DC) module may manage and control a data-dimension resource of the task, a computing control (computing controller, CC) may manage and control a computing-dimension resource of the task, an algorithm control (hierarchical intelligent collaboration controller, HicC) module may manage and control an algorithm-dimension resource of the task, and a connection control (network controller, NC) module may manage and control a connection-dimension resource of the task, including establishment, addition, deletion, modification, and the like of a connection path between the TEs.

Similarly, different modules in the network element that provides the TE function may be responsible for different types of subtasks. For example, a data execution (data agent, DA) may be responsible for specific execution of a data subtask, a computing execution (computing executor, CE) module may be responsible for specific execution of a computing subtask, and an algorithm execution (hierarchical intelligent collaboration agent, HicA) module may be responsible for specific execution of an algorithm subtask.

In conclusion, after new businesses are introduced into a communication network, some new businesses no longer use a PDU session as a management object, but evolve to use a task session as a management object to perform life cycle management at a task granularity. Dimensions related to these new businesses also evolve from pure connection to four dimensions: connection, computing, data, and algorithms, and a plurality of network nodes are included. Therefore, a topology is complex. However, in a QoS policy generation mechanism in a 5G network, a PDU session is used as a management object, and QoS guaranteed and differentiated services can be provided only for end-to-end connection on a simple path of a terminal device-RAN-CN can be provided. This is not applicable to generation of QoS policies for new businesses. Therefore, a key challenges lies in how to design a QoS policy generation mechanism for new businesses introduced into communication networks. To resolve this problem, embodiments of this application provide a communication method, to facilitate generation of QoS policies for the new businesses introduced into the communication networks, to ensure QoS of the businesses.

The following describes specific implementations of the QoS method provided in embodiments of this application. In descriptions of embodiments of this application, unless otherwise specified, "/" indicates an "or" relationship between associated objects. For example, A/B may represent A or B. In this application, "and/or" describes only an association relationship for describing associated objects, and represents that three relationships may exist. For example, A and/or B may represent the following three cases: Only A exists, both A and B exist, and only B exists. A and B each may be singular or plural. In addition, in the descriptions of this application, unless otherwise specified, "a plurality of" means two or more than two. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe technical solutions in embodiments of this application, terms such as "first" and "second" are used in embodiments of this application to distinguish between same items or similar items whose functions and purposes are basically the same. A person skilled in the art may understand that the words such as "first" and "second" do not limit a quantity and an execution sequence, and the words such as "first" and "second" do not indicate a definite difference either. In addition, in embodiments of this application, words such as "example" or "for example" are used to represent giving an example, an illustration, or a description. Any embodiment or design scheme described as "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In embodiments of this application, an "indication" may include a direct indication and an indirect indication, or may include an explicit indication and an implicit indication. Information indicated by information is referred to as to-be-indicated information. In a specific implementation process, the to-be-indicated information may be indicated in a plurality of manners. By way of example but not limitation, the to-be-indicated information may be directly indicated, for example, by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that are pre-agreed on (for example, stipulated in a protocol), to reduce indication overheads to some extent. In addition, a common part of all pieces of information may further be identified and indicated in a unified manner, to reduce indication overheads caused by separately indicating same information.

It should be understood that the to-be-indicated information may be sent as a whole, or may be divided into a plurality of pieces of sub-information for separate sending. In addition, sending periodicities and/or sending occasions of these pieces of sub-information may be the same or different. A specific sending method is not limited in embodiments of this application. The sending periodicities and/or the sending occasions of these pieces of sub-information may be predefined, for example, predefined according to a protocol, or may be configured by a transmit device by sending configuration information to a receive device.

In embodiments of this application, "predefined", "predefinition", "preconfigured", or "preconfiguration" may be implemented by pre-storing corresponding code or a corresponding table in a device, or may be implemented in another manner that may indicate related information. For example, the corresponding code or table may be burnt in the device at delivery, or configuration may be performed when the device accesses a network for a first time. A specific implementation is not limited in embodiments of this application. "Storing" may mean storing in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments in this application.

The "protocol" in embodiments of this application may be a protocol family in the communication field, a standard protocol with a frame structure similar to the protocol family, or a related protocol applied to a future communication system. This is not specifically limited in embodiments of this application.

In embodiments of this application, descriptions such as "when ...", "in a case of ...", and "if" all mean that a device performs corresponding processing in a specific objective situation, and are not intended to limit time. The descriptions do not mean that the device is required to have a determining action during implementation, and do not mean any other limitation.

In embodiments of this application, "sending information to ... (for example, an anchor network element)" may be understood as that a destination end of the information is the anchor network element, and may include directly or indirectly sending the information to the anchor network element. "Receiving information from ... (for example, the anchor network element) "may be understood as that a source end of the information is the anchor network element, and may include directly or indirectly receiving the information from the anchor network element. Information may undergo necessary processing, for example, a format change, between a source end for sending the information and a destination end. However, the destination end may understand valid information from the source end. Similar expressions in this application may be understood similarly, and details are not described herein again.

The technical solutions provided in this application may be applied to various communication systems, for example, a 5G wireless communication system and another communication system like a 5G post-evolved communication system, for example, a 6G communication system. In addition, terms "system" and "network" may be replaced with each other.

It should be noted that the network architecture and the business scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new business scenarios, the technical solutions provided in embodiments of this application are also applicable to similar technical problems.

It should be noted that names of network elements such as a TCF network element, a TPF network element, a cNode, and an sNode, and names of modules in the network elements that appear in this specification are merely possible example names. If a name actually used by a network element or a module in a network element in a subsequent communication network (for example, a 6G network) is different from a name in this specification, application of the communication method provided in embodiments of this application is not affected.

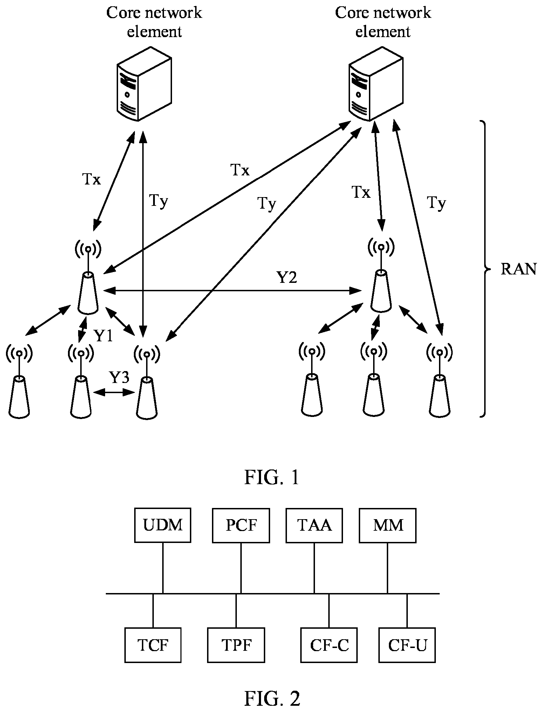

In a possible and non-limiting communication system to which embodiments of this application are applicable, a RAN architecture may be as shown in FIG. 1. In FIG. 1, to facilitate task processing, RAN nodes are classified into two types: a cNode and an sNode. The cNode is a region-level centralized coordination node of a plurality of sNodes, and is responsible for providing a TA function on a RAN side, for example, a task-related signaling interaction function on the RAN side. The sNode is responsible for providing a TE function on the RAN side, and may further provide a TS function on the RAN side in some scenarios, for example, a task scheduling and execution function on the RAN side.

In the RAN architecture of the communication system to which embodiments of this application are applicable, RAN nodes may be connected to each other in a wireless or wired manner. For example, as shown in FIG. 1, the cNode and the sNode communicate with each other through a YI interface. Different sNodes communicate with each other through a Y3 interface. Different cNodes communicate with each other through a Y2 interface. In the RAN architecture of the communication system to which embodiments of this application are applicable, the RAN node may be connected to a terminal device (not shown in FIG. 1) in a wireless manner. In some scenarios, the terminal device may also provide the TE function and/or the TS function.

In the RAN architecture of the communication system to which embodiments of this application are applicable, a core network element and a RAN node may be different physical devices, or may be a same physical device that integrates a core network logical function and a radio access network logical function. If the core network element and the RAN node are different physical devices, the RAN node may be connected to and/or communicate with the core network element in a wired or wireless manner.

The RAN architecture of the communication system to which embodiments of this application are applicable may further include another RAN node, for example, a wireless relay device and/or a wireless backhaul device (not shown in FIG. 1).

The RAN architecture shown in FIG. 1 may be a cellular system related to the 3rd generation partnership project (3rd generation partnership project, 3GPP), for example, a RAN architecture in a 6G mobile communication system, or may be an open access network (open RAN, O-RAN or ORAN), a cloud radio access network (cloud radio access network, CRAN), or a RAN architecture in a communication system in which the foregoing two or more systems are integrated.

In a possible scenario, a RAN node in a 5G network may be enhanced to provide the TE function on the RAN side.

In a possible and non-limiting communication system to which embodiments of this application are applicable, a core network architecture may be as shown in FIG. 2. A TCF network element provides a TA function on a core network side. A TPF network element provides a TE function on the core network side, and may further provide a TS function on the core network side in some scenarios. A control plane connection function (connection function-control, CF-C) network element and a user plane connection function (connection function-user, CF-U) network element respectively provide a control plane function and a user plane function for connection. A mobility management (mobility management, MM) is responsible for providing a mobility management function of a terminal device, storing location information of the terminal device, and the like. A unified data management (unified data management, UDM) network element is mainly responsible for performing functions such as subscription management, access authorization, and authentication information generation for a user. A policy control function (policy control function, PCF) network element is responsible for providing a policy rule for a network entity to implement and execute. A trust anchor agent (trust anchor agent, TAA) network element is responsible for ensuring reliability, integrity, and confidentiality of data, to prevent the data from various security and privacy attacks from internal and external entities of a network.

Optionally, the core network architecture of the communication system to which embodiments of this application are applicable may further include another network element, for example, may further include a unified data repository (unified data repository, UDR) network element, a task orchestration network element, or a network data analytics function (network data analytics function, NWDAF) network element. The unified data repository network element is mainly responsible for storing subscription data and a policy rule. The task orchestration network element is mainly responsible for task orchestration. The network data analytics function network element is mainly responsible for providing a network analysis service based on request data of a network service.

A name of the task orchestration network element is not limited in embodiments of this application. For example, the task orchestration network element may be referred to as a network AI management and orchestration (network AI management & orchestration, NAMO) network element.

In a possible and non-limiting communication system to which embodiments of this application are applicable, a RAN node may communicate with a terminal device through a radio air interface (Uu interface), and a protocol stack of the RAN node includes a control plane (control plane) protocol and a user plane (user plane) protocol. RAN nodes may communicate with each other through a Yn interface, and a protocol stack of the Yn interface may also include a control plane protocol and a user plane protocol. A control plane is responsible for signaling interaction, and a user plane is responsible for data interaction.

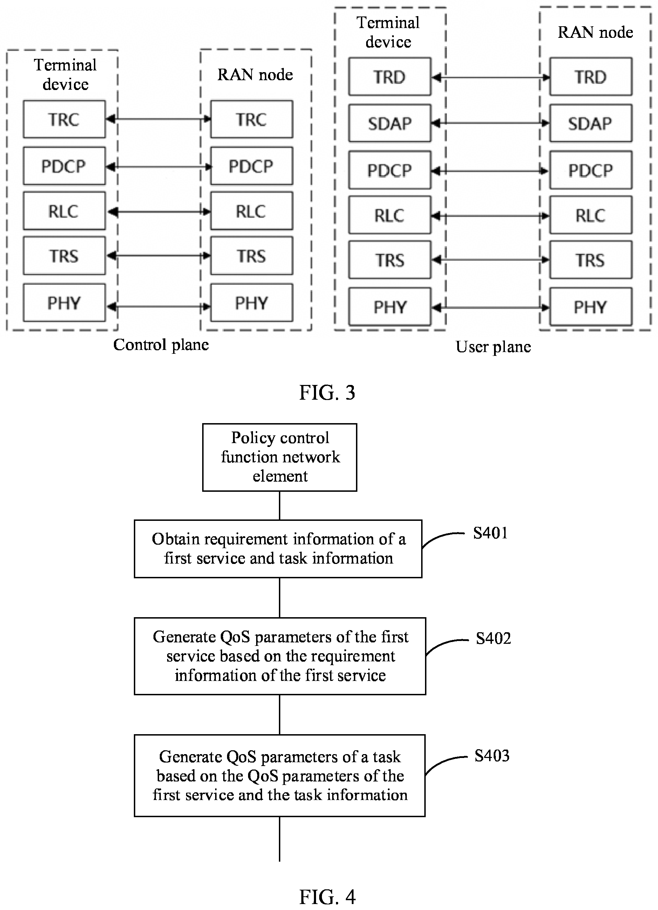

In a possible implementation, a control plane protocol stack and a user plane protocol stack between the RAN node and the terminal device may be shown in FIG. 3. A task resource control (task resource control, TRC) layer on the control plane may be obtained by enhancing a radio resource control (radio resource control, RRC) layer in a 5G protocol stack. In addition to existing functions of the RRC layer, task-related control functions such as AI, computing, and data processing are additionally added. A task resource scheduler (task resource scheduler, TRS) on the user plane may be obtained by enhancing a medium access control (medium access control, MAC) layer in the 5G protocol stack. For example, a computing power scheduling function is additionally added based on an existing air interface resource scheduling function of the MAC layer. In addition, a task resource data (task resource data, TRD) layer is added above a service data adaptation protocol (service data adaptation protocol, SDAP) layer. The TRD layer may provide task-related functions such as AI training/inference/model processing, and a sublayer of the TRD layer may provide a task data encapsulation function. For specific functions of other layers in FIG. 3, for example, a packet data convergence protocol (packet data convergence protocol, PDCP) layer, a radio link control (radio link control, RLC) layer, a TRS layer, a physical (physical, PHY) layer, and an SDAP layer, refer to an existing 5G communication protocol. Details are not described herein.

In embodiments of this application, the terminal device may be user-side device having a wireless transceiver function. The terminal device may also be referred to as a terminal (terminal), user equipment (user equipment, UE), an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like.

For example, the terminal device may be an uncrewed aerial vehicle, an internet of things (internet of things, IoT) device (for example, a sensor, an electricity meter, or a water meter), a V2X device, a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, a vehicle-mounted device (for example, a terminal on a vehicle, a bicycle, an electric vehicle, an airplane, a ship, a train, or a high-speed railway), a vehicle apparatus (for example, a vehicle apparatus, a vehicle-mounted module, a vehicle-mounted chip, an on board unit (on board unit, OBU), or an internet of vehicles telematics box (telematics box, T-BOX)), a wearable device (which may also be referred to as a wearable intelligent device, for example, a smartwatch, a smart band, a pedometer, or smart glasses), a tablet computer or a computer having a wireless transceiver function, a virtual reality (virtual reality, VR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, or an uncrewed aerial vehicle having an uncrewed aerial vehicle to uncrewed aerial vehicle (UAV to UAV, U2U) communication capability. The terminal device may be mobile or fixed. This is not specifically limited in this application.

The RAN node may also be referred to as an access network device, a RAN entity, an access node, or the like sometimes, and is a network element of a radio access network, and is responsible for functions related to an air interface. The RAN node may have different names in systems using different radio access technologies.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation evolved NodeB (ng-eNodeB, ng-eNB), a cluster node or a service node in a 6G mobile communication system, a base station in a future mobile communication system, or the like. The RAN node may be a macro base station, a micro base station or an indoor base station, a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU). All or a part of functions of the RAN node in this application may alternatively be implemented by using a software function running on hardware, or may be implemented by using an instantiated virtualization function on a platform (for example, a cloud platform). Alternatively, the RAN node in this application may be a logical node, a logical module, or software that can implement all or a part of functions of the RAN node.

In another possible scenario, a plurality of RAN nodes coordinate to assist the terminal device in implementing wireless access, and different RAN nodes separately implement a part of functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The following describes the communication method provided in embodiments of this application with reference to the communication systems shown in FIG. 1 and FIG. 2.

It should be noted that, in the following embodiments of this application, a name of a message between network elements, a name of each parameter, a name of each piece of information, or the like is merely an example, and may be another name in another embodiment. This is not specifically limited in the method provided in this application.

It may be understood that, in embodiments of this application, each network element or entity may perform a part or all of the steps in embodiments of this application. These steps or operations are merely examples. In embodiments of this application, other operations or variations of the operations may be further performed. In addition, the steps may be performed in a sequence different from that presented in embodiments of this application, and not all of the operations in embodiments of this application may be necessarily performed.

As shown in FIG. 4, a communication method provided in an embodiment of this application includes steps S401 to S403.

S401: A policy control function network element obtains requirement information of a first service and task information.

First, that the policy control function network element obtains the requirement information of the first service is described.

The requirement information of the first service includes a requirement on a QoS indicator related to the first service, for example, may include a requirement on at least one indicator such as a service success rate, a service response latency, system energy efficiency, a service coverage rate, or service density.

In a possible implementation, the requirement information of the first service may be determined based on a protocol signed by a user of the first service and a provider of the first service. For example, the requirement information of the first service may be service level agreement (service level agreement, SLA) information.

For obtaining the requirement information of the first service by the policy control function network element, in a possible implementation, the policy control function network element may obtain related information of the first service, where the related information of the first service includes at least one of the following: the requirement information of the first service or identification information of the first service. There is a mapping relationship between the identification information of the first service and the requirement information of the first service.

If the related information of the first service includes the identification information of the first service, the policy control function network element may determine, based on the predefined mapping relationship between the identification information of the first service and the requirement information of the first service, the requirement information of the first service corresponding to the identification information of the first service.

For example, the policy control function network element may predefine a one-to-one correspondence between identification information of different services and requirement information of the different services. If the policy control function network element obtains the identification information of the first service, the policy control function network element may determine, based on the predefined correspondence, requirement information of a service corresponding to the identification information of the first service, and determine the corresponding requirement information of the service as the requirement information of the first service.

In this embodiment of this application, "predefined" may also be understood as "preset", "preconfigured", "set in advance", "defined in a protocol", or "pre-agreed". This is uniformly described herein. Similar expressions in the following may also be understood in this way.

If the related information of the first service includes the identification information of the first service and the requirement information of the first service, optionally, the policy control function network element may establish the mapping relationship between the identification information of the first service and the requirement information of the first service.

If the related information of the first service includes the requirement information of the first service, optionally, the policy control function network element may determine, based on the predefined mapping relationship between the identification information of the first service and the requirement information of the first service, the identification information of the first service corresponding to the requirement information of the first service.

The identification information of the first service may also be understood as information that may be used in combination with the requirement information of the first service to jointly define the first service. For example, the identification information of the first service may include at least one of the following: information about the user or a third party that triggers the first service, information about a terminal device related to the first service, or information about the application service provider (application service provider, ASP).

For example, the third party may be a vendor of an over the top (over the top, OTT) business. The vendor of the OTT business may directly trigger the first service at a network layer.

For example, the identification information of the first service may include an identity (identity, ID) (user ID) of the user that triggers the first service (if the user is UE, the user ID is a UE ID), internet protocol (internet protocol, IP) 3-tuple information of a server that is of the OTT business and that triggers the first service, information about a service that is provided by a network and that is required by the vendor of the OTT business, an address of UE related to the first service (when a task session and/or a PDU session have/has been established), and information about the ASP that provides the first service. The IP 3-tuple information includes an IP address, a transport layer protocol, and a port.

The first service is jointly defined by the identification information of the first service and the requirement information of the first service. If two services have different identification information and requirement information, the two services may be considered as different services. If two services have same identification information and requirement information, the two services may be considered as a same service. In a possible scenario, if two services have different requirement information but same identification information, or if two services have different identification information but same requirement information, the two services may be considered as different services. In another possible scenario, if two services have different requirement information but same identification information, or if two services have different identification information but same requirement information, the two services may be considered as a same service.

Optionally, the policy control function network element may further obtain information about a service data flow (service data flow, SDF). For example, the information about the SDF may include IP 5-tuple information of business data. The IP 5-tuple information includes a source IP address, a source port, a destination IP address, a destination port, and a transport layer protocol.

Optionally, the policy control function network element may further obtain type information of the first service. The type information of the first service may indicate a category to which the first service belongs. For example, the type information of the first service may indicate that the first service is an AI service, a computing service, a data service, or a sensing service. Alternatively, the type information of the first service may further indicate a subcategory to which the first service belongs in the category. For example, it is assumed that the first service is an AI service. In this case, the type information of the first service may further indicate whether the first service is a model training service, a model inference service, or a model verification service.

A specific network element from which the policy control function network element obtains the requirement information of the first service is not limited in embodiments of this application. For example, the policy control function network element may obtain the requirement information of the first service from an application function network element.

The following describes how the policy control function network element obtains the task information.

The first service may be decomposed and mapped to obtain one or more tasks, and the task information includes related information of the task obtained by decomposing and mapping the first service.

Optionally, the task information may include at least one of the following: deployment information of the task or topology information of the task.

The deployment information of the task may include at least one of identification information of the task or information about a network element responsible for executing the task. For example, the deployment information of the task may include an ID of the task and an ID of the network element responsible for executing the task.

The topology information of the task may indicate a manner of connection between network elements related to the task. For example, the topology information of the task may describe at least one of the following connection manners: RAN-RAN (connection between different RAN nodes on a RAN side), CN-RAN-UE (connection between a core network element, a RAN node, and a terminal device), and UE-RAN-UE (connection between different terminal devices and a RAN node).

In a possible implementation, if the deployment information of the task includes the identification information of the task and the information about the network element responsible for executing the task, there may be a mapping relationship between the identification information of the task and the information about the network element responsible for executing the task. For example, the deployment information of the task may include IDs of a plurality of tasks and an ID of a network element that is responsible for executing each task and that corresponds to an ID of the task.

In this embodiment of this application, "the network element responsible for executing the task" or a similar expression, for example, "a network element that executes the task", may be referred to as an execution network element. This is uniformly described herein. The execution network element may provide a TE function. For details of the TE function, refer to the foregoing descriptions. Details are not described herein again.

In addition, in a possible scenario, the execution network element may also provide a TS function. For details of the TS function, refer to the foregoing descriptions. Details are not described herein again.

A specific network element from which the policy control function network element obtains the task information is not limited in embodiments of this application. For example, the policy control function network element may obtain the requirement information of the first service from an anchor network element.

In this embodiment of this application, the anchor network element is a network element that provides a TA function. This is uniformly described herein. For example, the anchor network element may be a TCF or a cNode.

Optionally, when obtaining the task information, the policy control function network element may further obtain identification information of QoS parameters of the first service. For example, the anchor network element sends both the identification information of the QoS parameters of the first service and the task information to the policy control function network element. The policy control function network element may determine, based on the identification information of the QoS parameters of the first service, the QoS parameters of the first service to which the task belongs, to further generate QoS parameters of the task. The QoS parameters of the first service and the QoS parameters of the task are specifically described below. Details are not described herein.

It may be understood that the procedure shown in FIG. 4 is merely a logical schematic procedure provided for ease of understanding of embodiments of this application, and does not represent an actual time sequence in embodiments of this application. A time sequence between different actions in a same step in FIG. 4 and a time sequence between different steps in FIG. 4 are not limited in embodiments of this application. For example, S401 is that the policy control function network element obtains the requirement information of the first service and the task information, but this does not mean that the policy control function network element obtains the requirement information of the first service and the task information at the same time. In a possible case, the policy control function network element may first obtain the requirement information of the first service, and then obtain the task information. For another example, in FIG. 4, S402 is performed after S401, but this does not mean that the policy control function network element first completes S401 and then completes S402. In a possible case, the policy control function network element may first obtain the requirement information of the first service, then generate the quality of service QoS parameters of the first service based on the requirement information of the first service, and then obtain the task information.

Optionally, in addition to the requirement information of the first service and the task information, the policy control function network element may further obtain other information that can be used to assist in generating a network policy. For example, the policy control function network element may further obtain at least one of the following information: charging-related information, data statistics or prediction information of some network functions or network services, bandwidth requirement information, or information indicating a data format (for example, media type (media type) information). A specific network element or network elements from which the policy control function network element obtains the foregoing information are not limited in embodiments of this application.

S402: The policy control function network element generates the QoS parameters of the first service based on the requirement information of the first service.

In S402, the policy control function network element may perform classification and combination based on the requirement information of the first service, to generate one or more sets of QoS parameters of the first service. For example, the policy control function network element may classify, based on different requirements on a QoS indicator in the requirement information of the first service, requirement information that requires the QoS indicator to be in a range into a set of QoS parameters, and requirement information that requires the QoS indicator to be in another range into another set of QoS parameters.

The QoS parameters of the first service may include the QoS indicator and a control policy of the first service. In this case, the QoS parameters of the first service are at a service level.

For example, a set of QoS parameters of the first service may include information indicating at least one indicator such as a service success rate, a service response latency, system energy efficiency, a service coverage rate, or service density, and information indicating a value corresponding to each indicator. The indicators such as the service success rate, the service response latency, the system energy efficiency, the service coverage rate, or the service density are QoS indicators of the first service. The value corresponding to each indicator represents a control policy for the indicator. For example, if a value corresponding to the service response latency is 1 ms, it indicates that an end-to-end latency requirement of the first service is 1 ms.

Optionally, the QoS parameters of the first service may be identified by identification information, and one piece of identification information may uniquely identify one set of QoS parameters.

In a possible implementation, the identification information of the QoS parameters of the first service may be generated by the policy control function network element. For example, the policy control function network element may generate a different service identity (service ID) for each set of QoS parameters of the first service.

In another possible implementation, the identification information of the QoS parameters of the first service may be predefined. For example, the policy control function network element selects, from service IDs predefined by an operator, a different service ID for each set of QoS parameters of the first service.

Optionally, if the first service has a plurality of sets of QoS parameters, each set of QoS parameters may have a different priority.

For example, if a business to which the first service belongs is of a very important person (very important person, VIP) that subscribes to the business with the operator, QoS parameters of a first priority may be a set of QoS parameters with a highest requirement. If the business to which the first service belongs is not of the VIP, the QoS parameters of the first priority may be a set of QoS parameters with a lower requirement.

Optionally, if the policy control function network element obtains the related information of the first service in S401, in S402, the policy control function network element may generate, based on the related information of the first service, a QoS template (template) corresponding to the first service. The QoS template includes a mapping relationship between the QoS parameters of the first service and the identification information of the first service. For how to generate the QoS template corresponding to the first service, refer to the foregoing descriptions of different cases of the related information of the first service. Details are not described herein again.

Optionally, after S402, the following steps may be further included.

The policy control function network element sends the QoS parameters of the first service to a unified data repository network element. Correspondingly, after receiving the QoS parameters of the first service, the unified data repository network element may store the QoS parameters of the first service.

If the policy control function network element generates the QoS template corresponding to the first service in S402, the policy control function network element may send the QoS template corresponding to the first service to the unified data repository network element.

S403: The policy control function network element generates the QoS parameters of the task based on the QoS parameters of the first service and the task information.

Based on this solution, the policy control function network element may generate service-level QoS parameters, and further generate task-level QoS parameters. This is applicable to a new business managed at a task granularity, and can support generation of a QoS policy of the new business in a communication network.

In S403, the QoS parameters of the task include a QoS indicator and a control policy of the task obtained by decomposing and mapping the first service. In this case, the QoS parameters of the task are at a task level.

For example, the QoS parameters of the task may include information indicating at least one indicator such as a task success rate, a task response latency, system energy efficiency, a task coverage rate, or task density, and information indicating a value corresponding to each indicator. The indicators such as the task success rate, the task response latency, the system energy efficiency, the task coverage rate, or the task density are QoS indicators of the task. The value corresponding to each indicator represents a control policy for the indicator. For example, if a value corresponding to the task response latency is 1 ms, it indicates that an end-to-end latency requirement of the task is 1 ms.

Optionally, the QoS parameters of the task may include at least one of the following: information about a specific QoS requirement or an identifier indicating the specific QoS requirement. There may be a predefined mapping relationship between the identifier indicating the specific QoS requirement and the specific QoS requirement, so that the corresponding specific QoS requirement may be determined by using the identifier indicating the specific QoS requirement.

For example, the information about the specific QoS requirement may include an indicator of the task and a value corresponding to the indicator of the task.

For example, the identifier indicating the specific QoS requirement may be a 6G QoS identifier (6G QoS identifier, 6QI).

For generating the QoS parameters of the task, in a possible implementation, the policy control function network element may generate a policy and charging control (policy and charging control, PCC) rule (PCC rule) based on the QoS parameters of the first service and the task information. The policy and charging control rule includes the QoS parameters of the task and a mapping relationship between the QoS parameters of the task and at least one of a task data flow (task data flow, TDF) or the execution network element that executes the task.

The task data flow may be understood as data transmission generated when the execution network element executes the task. In other words, the task data flow is at the task level.

In a possible scenario, if the business to which the first service belongs relates to one or more of four dimensions (connection, computing, data, and algorithms), the task data flow may be understood as data transmission generated when the execution network element executes a data subtask, a computing subtask, or an algorithm subtask.

Optionally, the policy and charging control rule may further include identification information (rule ID) of the policy and charging control rule.

Optionally, if the policy control function network element obtains the mapping relationship between the identification information of the task and the information about the execution network element that executes the task in S401, when generating the QoS parameters of the task, the policy control function network element may generate, based on the obtained mapping relationship, a mapping relationship between the QoS parameters of the task and the execution network element that executes the task.

In a possible scenario, if the business to which the first service belongs relates to a plurality of dimensions, the QoS parameters of the task generated by the policy control function network element may include QoS parameters related to the related dimensions.

For example, if the business to which the first service belongs relates to the four dimensions: connection, computing, data, and algorithms, the QoS parameters of the task generated by the policy control function network element may include connection-related QoS parameters, computing-related QoS parameters, data-related QoS parameters, and algorithm-related QoS parameters.

The following uses an example in which the business to which the first service belongs relates to at least one of the connection dimension, the computing dimension, the data dimension, or the algorithm dimension, to describe content that may be included in the policy and charging control rule generated by the policy control function network element.

If the business to which the first service belongs relates to the connection dimension, the policy and charging control rule generated by the policy control function network element may include at least one of the following: information about a connection-related specific QoS requirement, an identifier indicating the connection-related specific QoS requirement, information about an execution network element serving as a transmission start point of a service data flow of the task, and information about an execution network element serving as a transmission end point of the service data flow of the task.

Optionally, classification may be performed on each service data flow of the task based on a dimension, namely, the computing dimension, the data dimension, or the algorithm dimension, that is related to data transmitted in the service data flow (namely, the task data flow) of the task. In other words, the service data flow of the task may include different types of service data flows, and the different types may include a computing type, a data type, or an algorithm type. In this case, the policy and charging control rule may further include information about a type of the service data flow of the task.

The execution network element serving as a transmission start point of the service data flow of the task is an execution network element serving as a start point on a transmission path of the service data flow of the task, and the execution network element serving as a transmission end point of the service data flow of the task is an execution network element serving as an end point on the transmission path of the service data flow of the task. Optionally, transmission paths of all service data flows of the task may be the same or may be different.

For example, the information about the execution network element serving as a transmission start point of the service data flow of the task may include at least one of information such as an ID or an IP of the execution network element serving as a transmission start point of the service data flow of the task. This is similar to the information about the execution network element serving as a transmission end point of the service data flow of the task, and details are not described again.

For example, the information about the connection-related specific QoS requirement may include at least one of the following: a guaranteed flow bit rate (guaranteed flow bit rate, GFBR), a maximum flow bit rate (maximum flow bit rate, MFBR), an allocation and retention priority (allocation and retention priority, ARP), or the like.

For example, the identifier indicating the connection-related specific QoS requirement may be a 6QI.

If the business to which the first service belongs relates to the computing dimension, the policy and charging control rule generated by the policy control function network element may include at least one of the following: information about a computing-related specific QoS requirement, an identifier indicating the computing-related specific QoS requirement, information about an execution network element for performing a computing function, an identifier of a computing subtask, or a computing type of the computing subtask.

One task may be decomposed into one or more computing subtasks.

The execution network element for performing the computing function may be an execution network element that performs the computing subtask. For example, the information about the execution network element for performing the computing function may include at least one of information such as an ID or an IP of an execution network element that performs each computing subtask.

In a possible scenario, the execution network element that performs the computing function may further perform an algorithm function and/or a data function. In other words, the execution network element that performs the computing function may also be an execution network element that performs the algorithm function and/or the data function.

The computing type of the computing subtask may be obtained through division based on a computing specification (or referred to as a computing resource required by the computing subtask) of the computing subtask. For example, the computing resource may include a computational power type, for example, a central processing unit (central processing unit, CPU), a graphics processing unit (Graphics Processing Unit, GPU), or a field programmable gate array (field programmable gate array, FPGA), and a computational power requirement, for example, a million floating-point operations per second (million floating-point operations per second, MFLOPS).

For example, the information about the computing-related specific QoS requirement may include at least one of the following: a giga floating-point operations per second (giga floating-point operations per second, GFLOPS), an MFLOPS, an ARP, or the like.

For example, the identifier indicating the computing-related specific QoS requirement may be a 6QI.

For example, an identifier of the computing subtask may be an ID of the computing subtask.

If the business to which the first service belongs relates to the data dimension, the policy and charging control rule generated by the policy control function network element may include at least one of the following: information about a data-related specific QoS requirement, an identifier indicating the data-related specific QoS requirement, a data type, a data scale (which may also be referred to as a data magnitude), or information about an execution network element for performing the data function.

For example, the information about the execution network element for performing the data function may include at least one of information such as an ID or an IP of the execution network element for performing the data function.

For example, the information about the data-related specific QoS requirement may include at least one of the following: a latency (latency), an ARP, or the like. The latency may include at least one of a data transmission latency or a data processing latency.

For example, the identifier indicating the data-related specific QoS requirement may be a 6Ql.

The data type indicates a dimension corresponding to data. For example, the data type may include at least one of computing-type data, model-type data, or data-type data. The computing-type data indicates that the data corresponds to the computing dimension. The model-type data indicates that the data corresponds to a model dimension. The data-type data indicates that the data corresponds to the data dimension. For example, if the data is sensing data, it may indicate that the data corresponds to the data dimension, and needs to be specially processed through the data function.

For example, the data scale may include at least one of a bit (bit), a byte (byte), a kilobyte (kilobyte, KB), a megabyte (megabyte, MB), a gigabyte (gigabyte, GB), or a terabyte (terabyte, TB).

If the business to which the first service belongs relates to the algorithm dimension, the policy and charging control rule generated by the policy control function network element may include at least one of the following: information about an algorithm-related specific QoS requirement, an identifier indicating the algorithm-related specific QoS requirement, an algorithm type, an algorithm level, an application manner, or information about an execution network element for performing the algorithm function.

For example, the information about the execution network element for performing the algorithm function may include at least one of information such as an ID or an IP of the execution network element for performing the algorithm function.

The algorithm level may indicate a requirement on a model structure or scale. For example, the algorithm level may indicate that a model needs to be iteratively trained for 100 times, or may indicate that a model parameter scale is 7 billion (7 billion).

For example, the information about the algorithm-related specific QoS requirement may include at least one of the following: a training and inference latency (training & inference latency), inference accuracy (inference accuracy), an ARP, or the like.

For example, the identifier indicating the algorithm-related specific QoS requirement may be a 6QI.

For example, the algorithm type may be a recursive algorithm, a sorting algorithm, or a hash algorithm.

The application manner may indicate a manner of applying algorithm-related QoS parameters. For example, the application manner may indicate when to use algorithm-related QoS parameters of a first priority, and whether to use algorithm-related QoS parameters of a second priority if the algorithm-related QoS parameters of the first priority fail to meet a requirement.

Optionally, after S403, this embodiment of this application may further include the following step.

S404: The policy control function network element sends the QoS parameters of the task to the anchor network element.

Correspondingly, after receiving the QoS parameters of the task, the anchor network element may generate resource-level QoS parameters based on the QoS parameters of the task. The resource-level QoS parameters include at least one of the following: the connection dimension, the computing dimension, the data dimension, and the algorithm dimension.

A specific implementation in which the anchor network element generates the resource-level QoS parameters based on the QoS parameters of the task is described below, and details are not described herein.

In a possible implementation of S404, the policy control function network element may send the policy and charging control rule to the anchor network element. For content included in the policy and charging control rule, refer to the foregoing descriptions of S403. Details are not described herein again.

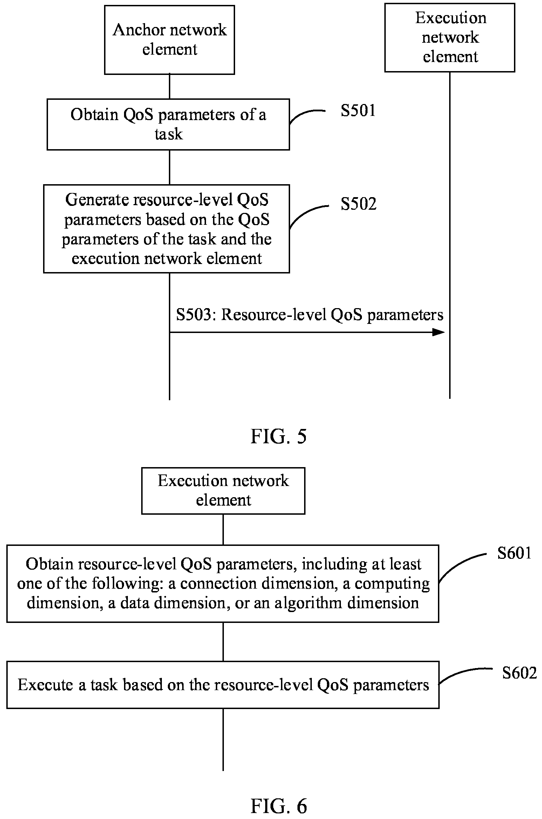

As shown in FIG. 5, another communication method provided in an embodiment of this application includes steps S501 to S503.

S501: An anchor network element obtains QoS parameters of a task.

For details of the QoS parameters of the task, refer to the foregoing descriptions of the QoS parameters of the task in S403. Details are not described herein again.

A specific network element from which the anchor network element obtains the QoS parameters of the task is not limited in embodiments of this application. For example, the anchor network element may obtain the QoS parameters of the task from a policy control function network element.

In a possible implementation of S501, the anchor network element may obtain a policy and charging control rule, where the policy and charging control rule includes the QoS parameters of the task and a mapping relationship between the QoS parameters of the task and at least one of a task data flow or an execution network element that executes the task. In this implementation, for specific content included in the policy and charging control rule, refer to the foregoing descriptions of the policy and charging control rule in S403. Details are not described herein again.

Optionally, this embodiment of this application may further include the following step: The anchor network element obtains an orchestration result of the task, where the orchestration result includes task template description information and a dependency relationship of the task.

The task template description information is used to describe the task or a subtask obtained by decomposing the task, for example, may include at least one of the following information: a task type (for example, a type of the subtask is algorithm, computing, or data), a resource requirement (the information may indicate a size of a resource required by the task or the subtask), computing complexity (the information may indicate complexity of an operation required for executing the task or the subtask), and runtime (runtime) description (for example, may be time from start to end of the task or the subtask).

The dependency relationship of the task may include a dependency relationship between different tasks obtained by decomposing and mapping a first service. For example, it is assumed that the first service is decomposed and mapped to a task A, a task B, and a task C. A dependency relationship between the tasks may be that execution of the task A depends on execution of the task B, and execution of the task C depends on execution of the task A and the task B.

Optionally, the orchestration result of the task may further include information about the execution network element that executes the task.

A specific network element from which the anchor network element obtains the orchestration result of the task is not limited in embodiments of this application. For example, the anchor network element may obtain the orchestration result of the task from a task orchestration network element.

Optionally, when obtaining the orchestration result of the task, the anchor network element may further obtain identification information of QoS parameters of the first service. For example, the task orchestration network element sends both the identification information of the QoS parameters of the first service and the orchestration result to the anchor network element.

A time sequence of obtaining the QoS parameters of the task by the anchor network element and obtaining the orchestration result of the task by the anchor network element is not limited in embodiments of this application. For example, the anchor network element may first obtain the orchestration result of the task, and then obtain the QoS parameters of the task.

Further, the anchor network element may obtain task information based on the orchestration result, where the task information includes deployment information and topology information of the task. For details of the task information, refer to the foregoing descriptions of the task information in S401. Details are not described herein again.

Optionally, the anchor network element may further send the task information to the policy control function network element. Correspondingly, after receiving the task information, the policy control function network element may generate the QoS parameters of the task based on the task information. For details of generating the QoS parameters of the task by the policy control function network element based on the task information, refer to the foregoing descriptions of S403. Details are not described herein again.

In a possible implementation, when sending the task information to the policy control function network element, the anchor network element may further send the QoS parameters of the first service to the policy control function network element.

Further, after obtaining the QoS parameters of the task, the anchor network element may complete binding between a task session (task session) and the QoS parameters of the task. The anchor network element may further classify the task data flow based on the QoS parameters of the task, to obtain a task QoS flow (task QoS flow), and complete binding between the QoS parameters of the task and the task QoS flow. One task QoS flow may include one or more task data flows having a same QoS requirement.

The task QoS flow may be understood as a minimum granularity for the anchor network element and the execution network element to perform QoS management. The anchor network element and the execution network element may provide QoS guaranteed and differentiated services based on the task QoS flow.

S502: The anchor network element generates resource-level QoS parameters based on the QoS parameters of the task and the execution network element that executes the task, where the resource-level QoS parameters include at least one of the following: a connection dimension, a computing dimension, a data dimension, and an algorithm dimension.

In S502, the anchor network element may decompose and map the QoS parameters of the task based on connection-, computing-, data-, or algorithm-related QoS parameters in the QoS parameters of the task, to generate the resource-level QoS parameters.

For the execution network element that executes the task, in a possible implementation, the anchor network element may determine the execution network element based on the obtained orchestration result of the task. In another possible implementation, the anchor network element may determine by itself the execution network element. For example, the anchor network element may select, based on a capability of the execution network element, the execution network element that executes the task.

In a possible implementation of S502, the anchor network element may determine, based on a difference between processing capabilities of execution network elements in each dimension, a subtask that needs to be executed by each execution network element, and determine corresponding resource-level QoS parameters.

The following describes, based on different cases of the QoS parameters included in the QoS parameters of the task, content that may be included in the resource-level QoS parameters generated by the anchor network element.

Case 1: The QoS parameters of the task include the connection-related QoS parameters. For example, the policy and charging control rule obtained by the anchor network element includes at least one of the following: information about a connection-related specific QoS requirement, an identifier indicating the connection-related specific QoS requirement, information about an execution network element serving as a transmission start point of a service data flow of the task, and information about an execution network element serving as a transmission end point of the service data flow of the task. For details, refer to the foregoing descriptions of S403.

In this case, the resource-level QoS parameters generated by the anchor network element may include the connection dimension. In a possible implementation, the QoS parameters in the connection dimension may include at least one of the following: the information about the connection-related specific QoS requirement, the identifier indicating the connection-related specific QoS requirement, and a packet identification rule (packet identification rule, PDR). The packet identification rule is used to distinguish between service data flows corresponding to different QoS requirements.

The following describes a possible implementation of distinguishing, based on the packet identification rule, service data flows corresponding to different QoS requirements. The packet identification rule includes a specific identification rule, and different packet identification rules are associated with different QoS requirements. If it is determined, based on the specific identification rule, that the service data flow matches the packet identification rule, it may be determined that the service data flow corresponds to a QoS requirement associated with the matched packet identification rule. In this way, service data flows corresponding to different QoS requirements can be distinguished. Further, service data flows corresponding to a same QoS requirement may be classified into a same task QoS flow based on QoS requirements corresponding to different service data flows.

Case 2: The QoS parameters of the task include the computing-related QoS parameters. For example, the policy and charging control rule obtained by the anchor network element includes at least one of the following: information about a computing-related specific QoS requirement, an identifier indicating the computing-related specific QoS requirement, information about an execution network element for performing a computing function, an identifier of a computing subtask, or a computing type of the computing subtask. For details, refer to the foregoing descriptions of S403.

In this case, the resource-level QoS parameters generated by the anchor network element may include the computing dimension. In a possible implementation, the QoS parameters in the computing dimension may include at least one of the following: the information about the computing-related specific QoS requirement, the identifier indicating the computing-related specific QoS requirement, or a computing subtask identification rule (computing identification rule, CDR). The computing subtask identification rule is used to distinguish between computing subtasks corresponding to different QoS requirements.

The following describes a possible implementation of distinguishing, based on the computing subtask identification rule, computing subtasks corresponding to different QoS requirements. The computing subtask identification rule includes a specific identification rule, and different computing subtask identification rules are associated with different QoS requirements. If it is determined, based on the specific identification rule, that the computing subtask matches the computing subtask identification rule, it may be determined that the computing subtask corresponds to a QoS requirement associated with the matched computing subtask identification rule, so that computing subtasks corresponding to different QoS requirements can be distinguished.

Case 3: The QoS parameters of the task include the data-related QoS parameters. For example, the policy and charging control rule obtained by the anchor network element includes at least one of the following: information about a data-related specific QoS requirement, an identifier indicating the data-related specific QoS requirement, a data type, or a data scale. For details, refer to the foregoing descriptions of S403.

In this case, the resource-level QoS parameters generated by the anchor network element may include the data dimension. In a possible implementation, the QoS parameters in the data dimension may include at least one of the following: the information about the data-related specific QoS requirement, the identifier indicating the data-related specific QoS requirement, or a data subtask identification rule (data identification rule, DDR). The data subtask identification rule is used to distinguish between data subtasks corresponding to different QoS requirements. For details of distinguishing between, based on the data subtask identification rule, data subtasks corresponding to different QoS requirements, refer to distinguishing between, based on the computing subtask identification rule, computing subtasks corresponding to different QoS requirements. Details are not described herein again.

Case 4: The QoS parameters of the task include the algorithm-related QoS parameters. For example, the policy and charging control rule obtained by the anchor network element includes at least one of the following: information about an algorithm-related specific QoS requirement, an identifier indicating the algorithm-related specific QoS requirement, an algorithm type, an algorithm level, or an application manner. For details, refer to the foregoing descriptions of S403.

In this case, the resource-level QoS parameters generated by the anchor network element may include the algorithm dimension. In a possible implementation, the QoS parameters in the algorithm dimension may include at least one of the following: the information about the algorithm-related specific QoS requirement, the identifier indicating the algorithm-related specific QoS requirement, or an algorithm subtask identification rule (model identification rule, MDR). The algorithm subtask identification rule is used to distinguish between algorithm subtasks corresponding to different QoS requirements. For details of distinguishing between, based on the algorithm subtask identification rule, algorithm subtasks corresponding to different QoS requirements, refer to distinguishing between, based on the computing subtask identification rule, computing subtasks corresponding to different QoS requirements. Details are not described herein again.

S503: The anchor network element sends the resource-level QoS parameters to the execution network element.

Correspondingly, after receiving the resource-level QoS parameters, the execution network element may execute the task based on the resource-level QoS parameters.

According to the communication method provided in this embodiment of this application, the resource-level QoS parameters including four dimensions may be generated, and a new business in a communication network also needs to coordinate resources in the four dimensions. Therefore, the communication method provided in this embodiment of this application can support generation of a QoS policy of the new business in the communication network.

In a possible implementation of S503, the anchor network element may send corresponding resource-level QoS parameters to an execution network element of each subtask obtained by decomposing the task.

In a possible scenario, based on different execution network elements, information that carries the resource-level QoS parameters and that is sent by the anchor network element to the execution network elements may have different names. For example, if the execution network element is a terminal device, the information that carries the resource-level QoS parameters may also be referred to as a QoS rule (QoS rule), or the QoS parameters are included in the QoS rule. For another example, if the execution network element is a TPF network element or an sNode, the information that carries the resource-level QoS parameters may be referred to as a QoS profile (QoS profile), or the resource-level QoS parameters are included in the QoS profile. However, a name of the information that carries the resource-level QoS parameters is not limited in embodiments of this application.

Optionally, after S503, this embodiment of this application may further include the following step.

The anchor network element receives notification information from the execution network element, where the notification information is used to notify that the execution network element fails to meet a corresponding QoS requirement (a connection-, computing-, data-, or algorithm-related QoS requirement).

Optionally, after receiving the notification information, the anchor network element may schedule a network resource to ensure that the execution network element can meet the corresponding QoS requirement.

Optionally, after receiving the notification information, the anchor network element may feed back, to another network element, that the execution network element fails to meet the corresponding QoS requirement. For example, the anchor network element may feed back, to the policy control function network element, that the execution network element fails to meet the corresponding QoS requirement.

In addition, in a possible case, the anchor network element may determine, based on a function for which a module in the execution network element is responsible, whether to send the resource-level QoS parameters to the execution network element.

For example, it is assumed that the resource-level QoS parameters include the QoS parameters in the data dimension. If a module that is in the execution network element and that is responsible for executing a data function (referred to as a data execution module below) further integrates a computing function and an algorithm function, the anchor network element may directly send the resource-level QoS parameters to the data execution module.

If the data execution module, a module responsible for performing the computing function (referred to as a computing execution module below), and a module responsible for performing the algorithm function (referred to as an algorithm execution module below) in the execution network element are independent modules, in other words, the data execution module does not integrate the computing function and the algorithm function, the computing execution module may be managed by a module that is in the anchor network element and that is responsible for managing and controlling a task computing resource (referred to as a computing control module below), and the algorithm execution module may be managed by a module that is in the anchor network element and that is responsible for managing and controlling a task algorithm resource (referred to as an algorithm control module below). It may also be understood as that the executed computing function and/or algorithm function provided by the execution network element each are/is managed by a corresponding module in the anchor network element. In this case, after the anchor network element obtains the resource-level QoS parameters, a module that is in the anchor network element and that is responsible for managing and controlling a task data resource (referred to as a data control module below) may invoke the corresponding computing function and/or algorithm function from the computing control module and/or the algorithm control module. If the computing function is invoked, the data control module may send corresponding QoS parameters in the computing dimension to the computing control module. If the algorithm function is invoked, the data control module may send corresponding QoS parameters in the algorithm dimension to the algorithm control module.

For another example, it is assumed that the resource-level QoS parameters include the QoS parameters in the algorithm dimension. If the algorithm execution module in the execution network element further integrates the computing function and the data function, the anchor network element may directly send the resource-level QoS parameters to the algorithm execution module.

However, if the data execution module, the computing execution module, and the algorithm execution module in the execution network element are independent modules, in other words, the algorithm execution module does not integrate the computing function and the data function, the computing execution module may be managed by the computing control module in the anchor network element, and the data execution module may be managed by a data control module in the anchor network element. It may also be understood as that the executed computing function and/or data function provided by the execution network element each are/is managed by a corresponding module in the anchor network element. In this case, after the anchor network element obtains the resource-level QoS parameters, the algorithm control module in the anchor network element may invoke the corresponding computing function and/or data function from the computing control module and/or the data control module. If the computing function is invoked, the algorithm control module may send corresponding QoS parameters in the computing dimension to the computing control module. If the data function is invoked, the algorithm control module may send corresponding QoS parameters in the data dimension to the data control module.

For another example, if the resource-level QoS parameters include the QoS parameters in the computing dimension, the anchor network element may directly send the QoS parameters in the computing dimension to the computing execution module.

In a possible case of the foregoing example, when invoking the computing function, the data control or algorithm control module may determine a new execution network element that executes the computing function and identification information (for example, a new computing subtask ID) of a new computing subtask, and send the identification information to the computing control module.

In a possible case of the foregoing example, when invoking the algorithm function, the data control module may determine new QoS parameters in the algorithm dimension, and send the new QoS parameters in the algorithm dimension to the algorithm control module.

In a possible case of the foregoing example, when invoking the data function, the algorithm control module may determine new QoS parameters in the data dimension, and send the new QoS parameters in the data dimension to the data control module.

In this embodiment of this application, the descriptions of the interaction between the internal modules of the network element are descriptions of logical interaction between the internal modules for ease of understanding of the technical solutions of this application, and do not mean that there is necessarily an actual interaction step between the internal modules when the network element performs the communication method in this embodiment of this application.

As shown in FIG. 6, another communication method provided in an embodiment of this application includes steps S601 and S602.

S601: An execution network element obtains resource-level QoS parameters, where the resource-level QoS parameters include at least one of the following: a connection dimension, a computing dimension, a data dimension, or an algorithm dimension.

For details of the resource-level QoS parameters, refer to the foregoing descriptions of the resource-level QoS parameters in S502. Details are not described herein again.

A specific network element from which the execution network element obtains the resource-level QoS parameters is not limited in embodiments of this application. For example, the execution network element may obtain the resource-level QoS parameters from an anchor network element.

S602: The execution network element executes a task based on the resource-level QoS parameters.

According to the communication method provided in this embodiment of this application, the task may be executed based on the resource-level QoS parameters, to implement QoS management on resources of the task in four dimensions.

In a possible implementation of S602, the execution network element may accordingly adjust a policy, allocate a resource, or the like based on the obtained resource-level QoS parameters, to meet a requirement of the resource-level QoS parameters. For example, it is assumed that the resource-level QoS parameters include a latency requirement, the execution network element may accordingly allocate computational power that can meet the latency requirement to perform a corresponding function.

In a possible case, when the execution network element executes the task, internal modules responsible for different functions may respectively execute different types of subtasks. Alternatively, when the execution network element executes the task, an internal module that integrates a plurality of functions may execute a plurality of types of subtasks. For example, it is assumed that a module that is in the execution network element and that is responsible for performing a computing function (which may be referred to as a computing execution module) further integrates an algorithm function and a data function. In this case, the computing execution module may perform a computing subtask, an algorithm subtask, and a data subtask.

In another possible case, the anchor network element may manage some modules in the execution network element, to schedule a corresponding function to execute a subtask. For details, refer to the foregoing descriptions of S503. Details are not described herein again.

Optionally, if the execution network element finds that the execution network element fails to meet a connection-, computing-, data-, or algorithm-related QoS requirement in the obtained resource-level QoS parameters, the execution network element may send notification information to the anchor network element, where the notification information is used to notify that the execution network element fails to meet the connection-, computing-, data-, or algorithm-related QoS requirement.

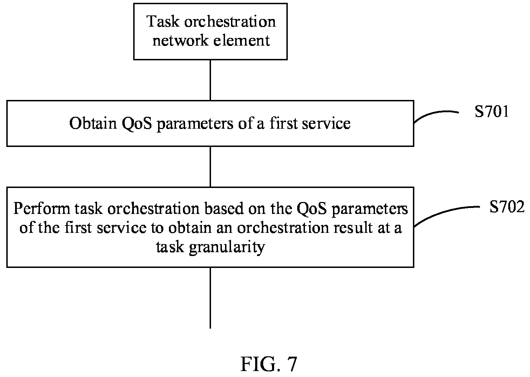

As shown in FIG. 7, another communication method provided in an embodiment of this application includes steps S701 and S702.

S701: A task orchestration network element obtains QoS parameters of a first service.

For details of the QoS parameters of the first service, refer to the foregoing descriptions of the QoS parameters of the first service in S402. Details are not described herein again.

A specific network element from which the task orchestration network element obtains the QoS parameters of the first service is not limited in embodiments of this application. For example, the task orchestration network element may obtain the QoS parameters of the first service from a unified data repository network element. Optionally, the QoS parameters of the first service stored in the unified data repository network element may be generated by a policy control function network element.

Optionally, a possible implementation of S701 may be as follows: The task orchestration network element obtains a QoS template corresponding to the first service. The QoS template includes a mapping relationship between the QoS parameters of the first service and identification information of the first service. For details of the QoS template corresponding to the first service, refer to the foregoing descriptions of S401. Details are not described herein again.

Optionally, before S701, this embodiment of this application may further include the following step.

A use case (use case) obtained by instantiating the first service is input to the task orchestration network element. The use case may include the identification information of the first service or identification information of the QoS parameters of the first service.

In this case, S701 may be as follows: The task orchestration network element obtains the corresponding QoS parameters of the first service based on the identification information of the first service or the identification information of the QoS parameters of the first service.

S702: The task orchestration network element performs task orchestration based on the QoS parameters of the first service, to obtain an orchestration result at a task granularity. The orchestration result includes template description information and a dependency relationship of a task obtained by decomposing and mapping the first service.

According to the communication method provided in this embodiment of this application, a task orchestration function may be provided for a new business, especially some complex businesses, in a communication network, to implement hierarchical service-to-task QoS management.

For details of the orchestration result, refer to the foregoing descriptions of S501. Details are not described herein again.

Optionally, after S702, this embodiment of this application may further include the following step.

The task orchestration network element sends the orchestration result to an anchor network element.

Correspondingly, after receiving the orchestration result, the anchor network element may obtain task information based on the orchestration result, where the task information includes deployment information and topology information of the task. For details of obtaining the task information by the anchor network element based on the orchestration result, refer to the foregoing descriptions of S501. Details are not described herein again.

Optionally, if the QoS parameters of the first service includes a plurality of sets of QoS parameters, and each set of QoS parameters has a different priority. The task orchestration network element may first obtain QoS parameters of a first priority of the first service, and perform task orchestration based on the QoS parameters of the first priority.

Further, if orchestration performed based on the QoS parameters of the first priority fails, and no orchestration result is obtained, the task orchestration network element may further obtain QoS parameters of a second priority of the first service, and perform task orchestration based on the QoS parameters of the second priority.

Similarly, if orchestration performed based on the QoS parameters of the second priority fails, the task orchestration network element may further obtain QoS parameters of a secondary priority of the first service and perform task orchestration, until the orchestration result is obtained.

In a possible scenario, the foregoing embodiments may be applied in combination. Alternatively, the foregoing embodiments may be independently applied.

In a scenario in which the foregoing embodiments are applied in combination, a possible example procedure includes: The policy control function network element generates the QoS parameters of the first service, further generates QoS parameters of the task, and sends the QoS parameters of the task to the anchor network element. The anchor network element may generate resource-level QoS parameters based on the obtained QoS parameters of the task, and send the resource-level QoS parameters to the execution network element.

It is assumed that the policy control function network element is a PCF network element, the unified data repository network element is a UDR network element, an application function network element is an AF (application function) network element, and the task orchestration network element is an NAMO network element. The anchor network element includes a TCF network element and a cNode. The execution network element includes a TPF network element, an sNode, and UE. There may be one or more network elements of each type.

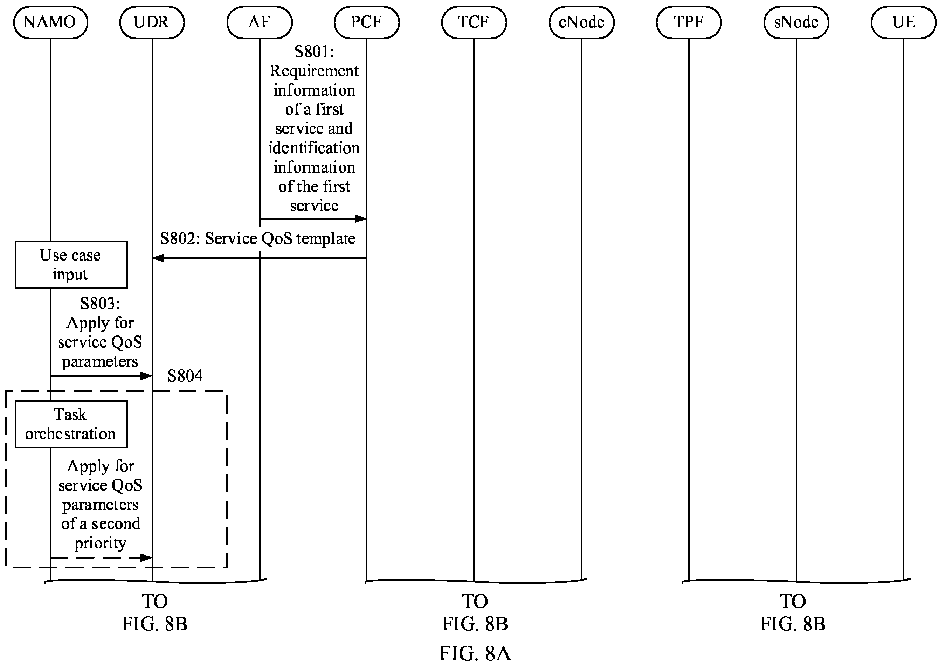

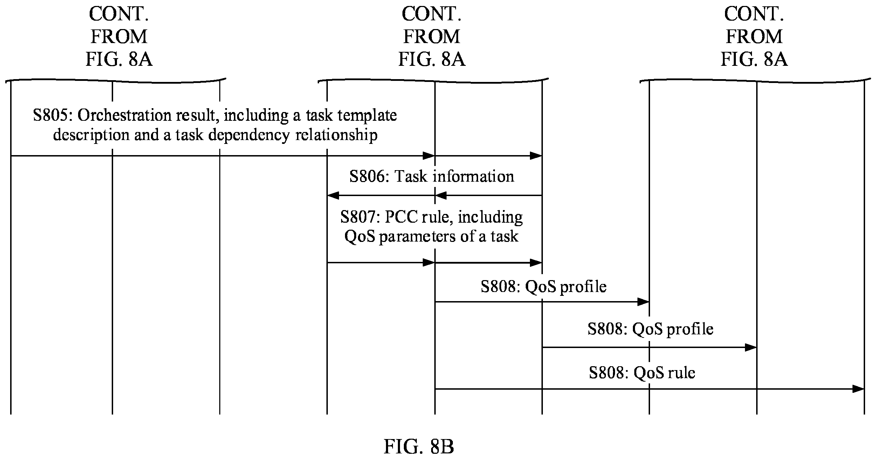

FIG. 8A and FIG. 8B are a diagram of a possible example procedure. As shown in FIG. 8A and FIG. 8B, the example procedure includes the following steps.

S801: An AF network element inputs requirement information (service requirements) of a first service and identification information of the first service to a PCF network element. The identification information includes at least one of the following: a use ID of a user that triggers the first service, a UE IP of UE related to the first service, information about an SDF, and information about an ASP of the first service.

For details of S801, refer to the foregoing descriptions of S401. Details are not described herein again.

S802: The PCF network element performs classification and merging based on the input of the AF network element, generates a service QoS template, and transfers the service QoS template to a UDR network element. The service QoS template includes a mapping relationship between QoS parameters of the first service and the identification information of the first service.

The UDR network element stores the received service QoS template.

Optionally, each type of QoS of the first service may be identified by a unique service ID.

For details of S802, refer to the foregoing descriptions of S402. Details are not described herein again.

S803: After a use case is input, an NAMO network element applies to the UDR network element for corresponding service QoS parameters of the first service based on at least one of information about the SDF, information about the ASP, or information about the UE in the use case, or a service ID predefined by an operator. In a possible implementation, during first application, the NAMO network element applies for service QoS parameters of a first priority.

For details of S803, refer to the foregoing descriptions of S701. Details are not described herein again.

S804: The NAMO network element performs task orchestration based on the QoS parameters of the first service. If orchestration performed based on the service QoS parameters of the first priority fails, the NAMO network element applies to the UDR network element for service QoS parameters of a second priority, and continues to perform orchestration until an orchestration result is obtained.

S805: The NAMO network element transfers the orchestration result to a TCF network element and a cNode. The orchestration result includes a task template description and a task dependency relationship. The task template description may include the following information: a task type, a resource requirement, computing complexity, and running time.

For details of S804 and S805, refer to the foregoing descriptions of S702. Details are not described herein again.

S806: The TCF network element and the cNode network element obtain task information based on the orchestration result, and input the task information to the PCF network element.

The task information includes a service ID of the QoS parameters of the first service, an ID of a task obtained by decomposing and mapping the first service, an ID of an execution network element that executes the task, and task topology information.

For details of S806, refer to the foregoing descriptions of S501. Details are not described herein again.

S807: The PCF network element completes decomposition of the QoS parameters of the service into QoS parameters of the task, generates a PCC rule (PCC rule), and inputs the PCC rule to the TCF network element or the cNode.

The PCC rule includes a rule ID (rule ID), TDF detection (detection), a TDF template (template), a 6QI, and QoS requirement information (QoS requirements).

The TDF detection and the TDF template represent a mapping relationship between a TDF and the QoS parameters of the task. The QoS parameters of the task include the 6QI and the QoS requirement information, the 6QI is an identifier indicating a specific QoS requirement, and the QoS requirement information is the specific QoS requirement.

For details of S807, refer to the foregoing descriptions of S403. Details are not described herein again.

Further, the TCF network element or the cNode binds the QoS parameters of the task to a task QoS flow based on the PCC rule.

S808: The TCF network element or the cNode completes mapping from the QoS parameters of the task to resource-level QoS parameters, and transfers the four-dimensional resource-level QoS parameters to a TPF, an sNode, or UE. The resource-level QoS parameters transferred to the UE may be included in a QoS rule (QoS rule). The resource-level QoS parameters transferred to the TPF or the sNode may be included in a QoS profile (QoS profile).

For details of S808, refer to the foregoing descriptions of S502. Details are not described herein again.

In a scenario in which the foregoing embodiments are applied in combination, another possible example procedure includes: The policy control function network element sends the QoS parameters of the task to the anchor network element. The anchor network element generates resource-level QoS parameters based on the obtained QoS parameters of the task, and send the resource-level QoS parameters to the execution network element. The execution network element executes a task based on the resource-level QoS parameters.

The resource-level QoS parameters include four dimensions: a connection dimension, a computing dimension, a data dimension, and a computing dimension. The following describes possible example procedures for different dimensions.

It is assumed that the policy control function network element is a PCF network element. The anchor network element includes a TCF network element and a cNode. The execution network element includes a TPF network element, an sNode, and UE. There may be one or more network elements of each type.

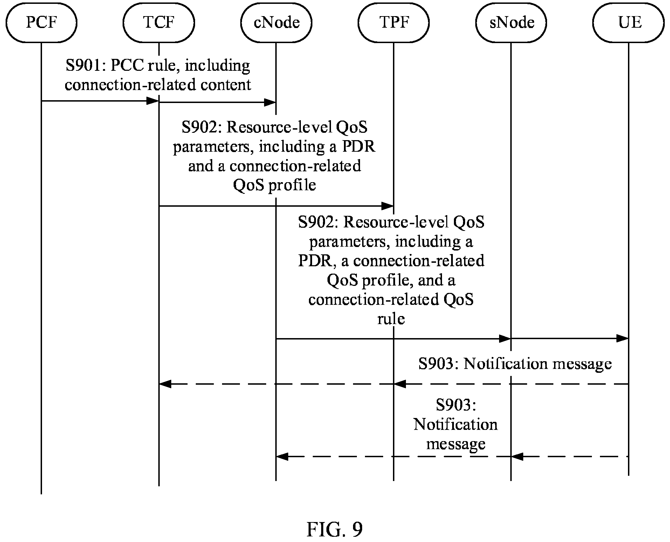

FIG. 9 is a diagram of an example procedure related to the connection dimension. As shown in FIG. 9, the example procedure includes the following steps.

S901: A PCF network element transfers a PCC rule to a TCF network element or a cNode. In the PCC rule, connection-related content includes at least one of the following: a TDF template (including an ID/IP of an execution network element serving as a transmission start point, an ID/IP of an execution network element serving as a transmission end point, and a transmission type), a 6QI, and a connection-related QoS requirement (for example, a GFBR/an MFBR/an ARP).

For details of S901, refer to the foregoing descriptions of S403. Details are not described herein again.

S902: The TCF network element or the cNode further splits QoS parameters of a task into resource-level QoS parameters, and sends the resource-level QoS parameters to a TPF network element, an sNode, or UE.

In the resource-level QoS parameters, QoS parameters in the connection dimension includes a PDR and a QoS profile/QoS rule (for example, the 6QI, the ARP, and the GFBR/MFBR).

Optionally, the TCF network element or the cNode may further send a QoS enforcement rule (QoS enforcement rule, QER) to the TPF network element, the sNode, or the UE. The QER may indicate specific sets of QoS parameters to be used in different cases. The TPF network element, the sNode, or the UE may select to-be-used QoS parameters based on the QER.

Optionally, S903 may be further included: When the TPF, the sNode, or the UE finds, when performing a connection function, that a corresponding QoS requirement fails to be met, the TPF, the sNode, or the UE reports the failure by using a notification (notification) message to the TCF network element or the cNode.

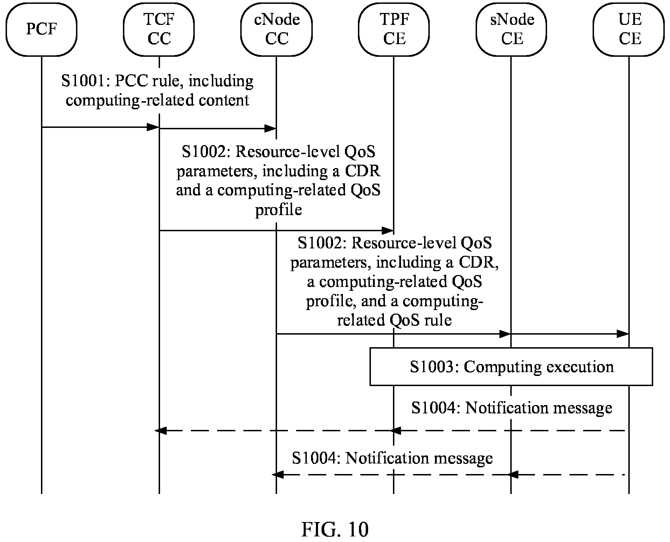

FIG. 10 is a diagram of an example procedure related to the computing dimension. A computing control CC module shown in FIG. 10 is a module that is in a TCF network element or a cNode and that is responsible for managing and controlling a resource of a task in the computing dimension. The computing execution CE module is a module that is in a TPF network element, an sNode, or UE and that is responsible for performing a computing function.

It may be understood that the schematic interaction between the modules and the network elements shown in FIG. 10 is a schematic logical interaction provided for ease of understanding of the procedure, and does not represent that the modules shown in FIG. 10 send and receive information during actual application.

As shown in FIG. 10, the example procedure includes the following steps.

S1001: A PCF network element transfers a PCC rule to a TCF network element or a cNode. In the PCC rule, computing-related content includes at least one of the following: a computing flow template (computing flow template) (including an ID/IP of an execution network element that performs a computing function and a computing type), a 6QI, and a computing-related QoS requirement (for example, a GFLOPS/an MFLOPS/an ARP).

For details of S1001, refer to the foregoing descriptions of S403. Details are not described herein again.

S1002: The TCF network element or the cNode further splits QoS parameters of a task into resource-level QoS parameters, and sends the resource-level QoS parameters to a TPF network element, an sNode, or UE.

In the resource-level QoS parameters, QoS parameters in the computing dimension includes a CDR and a QoS profile/QoS rule (for example, the 6QI, the ARP, the GFLOPS, or the MFLOPS).

In a possible implementation, the 6QI included in the QoS parameters in the computing dimension may also be referred to as a 6QI-C.

In a possible implementation, a CC module in the TCF network element or a CC module in the cNode may generate the resource-level QoS parameters.

S1003: A CE module performs the computing function based on the QoS parameters in the computing dimension.

Specifically, a CE module in the TPF network element, the sNode, or the UE performs the computing function based on the QoS parameters in the computing dimension.

Optionally, the TCF network element or the cNode may further send a QER to the TPF network element, the sNode, or the UE. The TPF network element, the sNode, or the UE may select to-be-used QoS parameters based on the QER.

Optionally, S1004 may be further included: When the TPF, the sNode, or the UE finds, when performing the computing function, that a corresponding QoS requirement fails to be met, the TPF, the sNode, or the UE reports the failure by using a notification (notification) message to the TCF network element or the cNode.

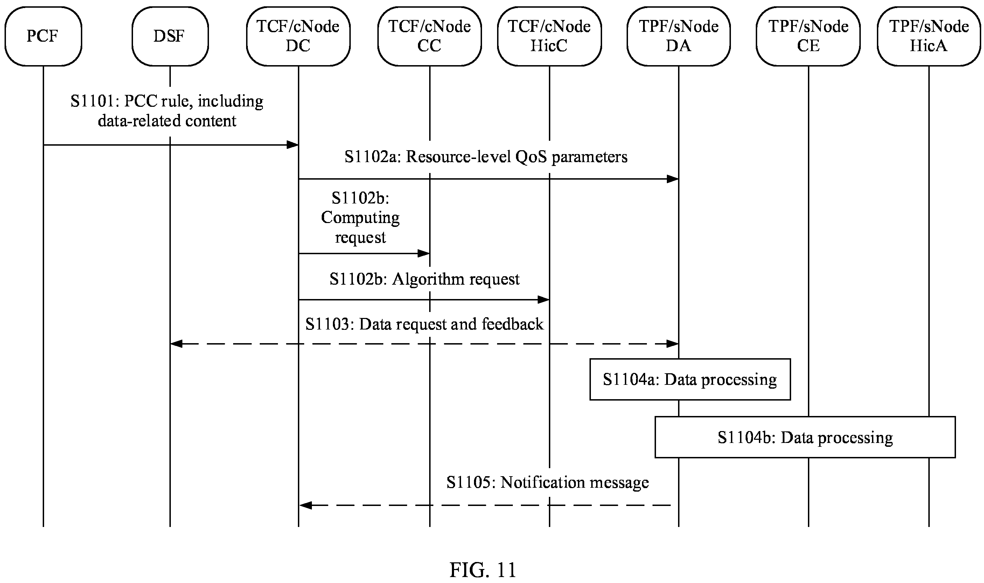

FIG. 11 is a diagram of an example procedure related to the data dimension. A data control DC module shown in FIG. 11 is a module that is in a TCF network element or a cNode and that is responsible for managing and controlling a resource of a task in the data dimension. For the CC module, refer to the foregoing descriptions of FIG. 10. An algorithm control HicC module is a module that is in the TCF network element or the cNode and that is responsible for managing and controlling a resource of the task in an algorithm dimension. A data execution DA module is a module that is in a TPF network element, an sNode, or UE and that is responsible for performing a data function. For the CE module, refer to the foregoing descriptions of FIG. 10. An algorithm execution HicA module is a module that is in the TPF network element, the sNode, or the UE and that is responsible for performing an algorithm function.

It may be understood that the schematic interaction between the modules and the network elements shown in FIG. 11 is a schematic logical interaction provided for ease of understanding of the procedure, and does not represent that the modules shown in FIG. 11 send and receive information during actual application.

As shown in FIG. 11, the example procedure includes the following steps.

S1101: A PCF network element transfers a PCC rule to the TCF network element or the cNode. In the PCC rule, data-related content includes at least one of the following: a data level template (data level template) (including a data type and a data scale), a 6QI, and a data-related QoS requirement (for example, a latency/an ARP).

For details of S1101, refer to the foregoing descriptions of S403. Details are not described herein again.

S1102: The TCF network element or the cNode (for example, a DC module in the TCF network element or the cNode) further splits QoS parameters of the task into resource-level QoS parameters, and sends the resource-level QoS parameters to the TPF network element, the sNode, or the UE. In the resource-level QoS parameters, QoS parameters in the data dimension include a DDR and the data-related QoS requirement. In a possible implementation, the 6QI included in the QoS parameters in the data dimension may also be referred to as a 6QI-D.

Based on different cases, S1102 has two different implementations: S1102a and S1102b.

If the DA module is an integrated module (the DA includes a computing function and the algorithm function in addition to the data function), and the functions integrated into the DA module are sufficient to meet the QoS requirement included in the resource-level QoS parameters, the example procedure includes S1102a: The TCF network element or the cNode directly transfers the resource-level QoS parameters to the DA module.

If the DA module is a non-integrated module, or the computing function and/or the algorithm function integrated by the DA are/is insufficient to meet the QoS requirement included in the resource-level QoS parameters, the example procedure includes S1102b: The DC module in the TCF network element or the cNode invokes the computing function and/or the algorithm function (that is, invokes the CE module and/or the HicA module) from the CC module and/or the HicC module, and transfers the corresponding QoS parameters to the CC module and/or the HicC module. For example, QoS parameters in a computing dimension sent to the CC module may be included in a computing request message. QoS parameters in an algorithm dimension sent to the HicC module may be included in an algorithm request message.

Optionally, when invoking the computing function from the CC module, the DC module may further send, to the CC module, an ID of a new network element that executes the computing function and a new computing subtask ID.

Optionally, when the DC module invokes the algorithm function from the HicC module, the QoS parameters sent to the HicC module may be new QoS parameters in the algorithm dimension.

Optionally, S1103 may be further included: The TPF network element, the sNode, or the UE requests data from a data storage function (data storage function, DSF) network element, and correspondingly, the DSF network element feeds back the data. The DSF network element is responsible for storing data and/or a model.

As shown in FIG. 11, if the example procedure includes S1102a, the procedure further includes S1104a: The DA module performs the data function (for example, data processing).

If the example procedure includes S1102b, S1104b is further included: The invoked CE module and/or HicA module and the DA module perform the data function (for example, data processing).

Optionally, S1105 may be further included: When the TPF, the sNode, or the UE finds, when performing the data function, that the corresponding QoS requirement fails to be met, the TPF, the sNode, or the UE reports the failure by using a notification (notification) message to the TCF network element or the cNode.

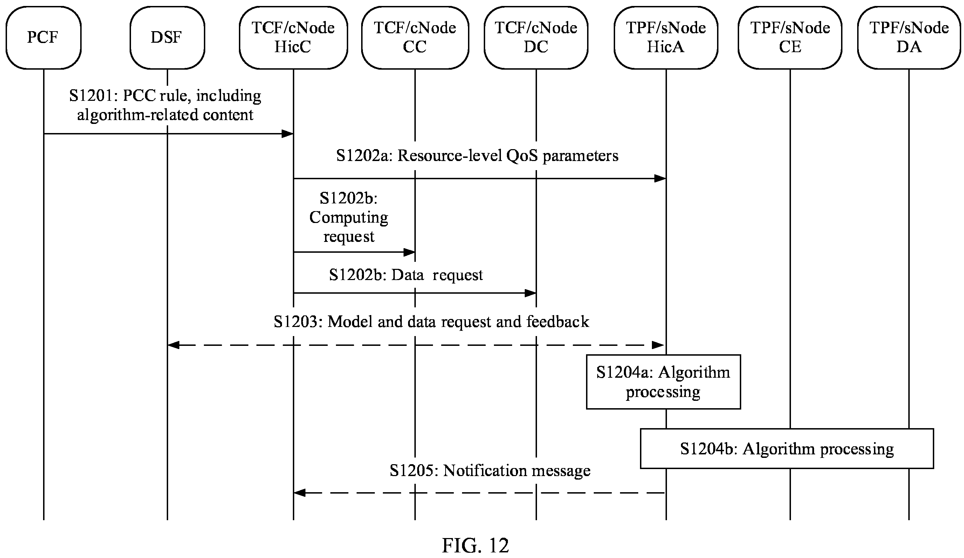

FIG. 12 is a diagram of an example procedure related to the algorithm dimension. For a DC module, a CC module, an HicC module, a DA module, a CE module, an HicA module, or a DSF network element shown in FIG. 12, refer to the foregoing descriptions of FIG. 11.

It may be understood that the schematic interaction between the modules and the network elements shown in FIG. 12 is a schematic logical interaction provided for ease of understanding of the procedure, and does not represent that the modules shown in FIG. 12 send and receive information during actual application.

As shown in FIG. 12, the example procedure includes the following steps.

S1201: A PCF network element transfers a PCC rule to a TCF network element or a cNode. In the PCC rule, algorithm-related content includes at least one of the following: a model level template (model level template) (including a model type, a model level, and an application manner), a 6QI, and an algorithm-related QoS requirement (for example, a training and inference latency (training & inference latency), inference accuracy (inference accuracy), or an ARP).

For details of S1201, refer to the foregoing descriptions of S403. Details are not described herein again.

S1202: The TCF network element or the cNode further splits QoS parameters of a task into resource-level QoS parameters, and sends the resource-level QoS parameters to a TPF network element, an sNode, or UE. In the resource-level QoS parameters, QoS parameters in the algorithm dimension includes an MDR and an algorithm-related QoS requirement. In a possible implementation, the 6QI included in the QoS parameters in the algorithm dimension may also be referred to as a 6QI-M.

Based on different cases, S1202 has two different implementations: S1202a and S1202b.

If the HicA module is an integrated module (the HicA further includes a computing function and a data function in addition to an algorithm function), and the functions integrated into the HicA module are sufficient to meet the QoS requirement included in the resource-level QoS parameters, the example procedure includes S1202a: The TCF network element or the cNode directly transfers the resource-level QoS parameters to the HicA module.

If the HicA module is a non-integrated module, the example procedure includes S1202b: The HicC module in the TCF network element or the cNode invokes a computing function and/or a data function (that is, invokes the CE module and/or the DA module) for the CC module and/or the DC module, and transfers the corresponding QoS parameters to the CC module and/or the DC module. For example, QoS parameters in a computing dimension sent to the CC module may be included in a computing request message. QoS parameters in a data dimension sent to the DC module may be included in a data request message.

Optionally, when invoking the computing function from the CC module, the HicC module may further send, to the CC module, an ID of a new network element that executes the computing function and a new computing subtask ID.

Optionally, when the HicC module invokes the data function from the DC module, the QoS parameters sent to the DC module may be new QoS parameters in the data dimension.

Optionally, S1203 may be further included: The TPF network element, the sNode, or the UE requests a model and data from the DSF network element, and correspondingly, the DSF network element feeds back the model and the data. When obtaining the model and the data, the TPF network element, the sNode, or the UE may directly obtain the model and the data without data plane preprocessing.

As shown in FIG. 12, if the example procedure includes S1202a, the procedure further includes S1204a: The HicA module performs the algorithm function (for example, algorithm processing).

If the example procedure includes S1202b, S1204b is further included: The invoked CE module and/or DA module and the HicA module perform the algorithm function (for example, algorithm processing).

Optionally, S1205 may be further included: When the TPF, the sNode, or the UE finds, when performing the algorithm function, that a corresponding QoS requirement fails to be met, the TPF, the sNode, or the UE reports the failure by using a notification (notification) message to the TCF network element or the cNode.

In a possible scenario, a plurality of procedures in the procedures shown in FIG. 8A and FIG. 8B, FIG. 9, FIG. 10, FIG. 11, and FIG. 12 may be applied in combination. Alternatively, the procedure shown in FIG. 8A and FIG. 8B, FIG. 9, FIG. 10, FIG. 11, or FIG. 12 may be independently applied.

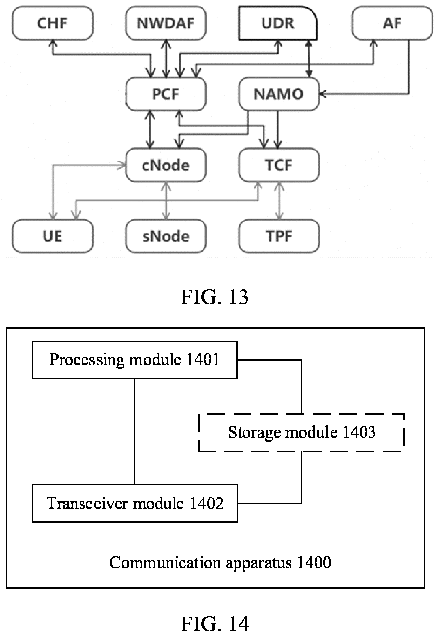

In addition, different network elements in the foregoing embodiments may further form a plurality of end-to-end connected architectures. FIG. 13 is a possible end-to-end architecture to which an embodiment of this application is applicable. As shown in FIG. 13, connected network elements may communicate with each other.

Based on the architecture shown in FIG. 13, a possible QoS parameter generation mechanism may be as follows.

A PCF network element may obtain information from a charging function (charging Function, CHF) network element, an NWDAF network element, and an AF network element. The CRF network element may provide charging-related information. The NWDAF network element may provide data statistics or prediction information of some network functions or network services. The AF network element may provide a user ID, a UE IP, a media type, a bandwidth requirement, ASP information, SDF information, a type of a first service (for example, the first service is an AI service, a sensing service, a computing service, or a data service), requirement information of the first service, and the like. The PCF network element may generate service-level QoS parameters based on the obtained information, and store the service-level QoS parameters in a UDR network element. After obtaining a use case input by the AF network element, an NAMO network element may obtain the corresponding service-level QoS parameters from the UDR network element, and perform task orchestration based on the service-level QoS parameters to obtain an orchestration result. The NAMO network element transfers the orchestration result to each TA (for example, the TCF network element and the cNode in FIG. 13). The TCF network element and the cNode obtain task information based on the orchestration result, and provide the task information to the PCF network element. The PCF network element decomposes and maps the service-level QoS parameters based on the task information, to generate task-level QoS parameters, and transfers the task-level QoS parameters to the TCF network element or the cNode. Finally, the TCF network element and the cNode determine TEs (for example, the TPF network element, the sNode, and the UE in FIG. 13) that execute the task, decompose and map the task-level QoS parameters to generate resource-level QoS parameters, and transfer the resource-level QoS parameters to the corresponding TPF network element, sNode, or UE.

It can be learned that, according to the communication method provided in this embodiment of this application, an end-to-end QoS differentiated and guaranteed service can be provided for a new business in a communication network.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be each network element in the foregoing method embodiments, an apparatus including the network element, or a component that can be used in the network element. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application can be implemented by hardware or a combination of hardware and computer software. Whether a function is performed by hardware or computer software driving hardware depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be understood that module division in embodiments of this application is an example, and is merely logical function division. In practice, another division manner may be used.

FIG. 14 is a diagram of a structure of a communication apparatus 1400. The communication apparatus 1400 includes a processing module 1401 and a transceiver module 1402. Optionally, the communication apparatus 1400 may further include a storage module 1403. The transceiver module 1402 may also be referred to as a transceiver unit, and is configured to implement a transceiver function, for example, may be a transceiver circuit, a transceiver machine, a transceiver, or a communication interface.

For example, the communication apparatus 1400 is the policy control function network element in the foregoing embodiments. In a possible implementation:
the transceiver module 1402 is configured to obtain requirement information of a first service and task information, where the task information includes related information of a task obtained by decomposing and mapping the first service; the processing module 1401 is configured to generate QoS parameters of the first service based on the requirement information of the first service; and the processing module 1401 is further configured to generate QoS parameters of the task based on the QoS parameters of the first service and the task information.

Optionally, that the transceiver module 1402 obtains the requirement information of the first service includes: obtaining related information of the first service, where the related information of the first service includes one or more of the following: the requirement information of the first service or identification information of the first service, and there is a mapping relationship between the identification information of the first service and the requirement information of the first service.

Optionally, that the processing module 1401 generates the QoS parameters of the first service based on the requirement information of the first service includes: generating, based on the related information of the first service, a QoS template corresponding to the first service, where the QoS template includes a mapping relationship between the QoS parameters of the first service and the identification information of the first service.

Optionally, the transceiver module 1402 is further configured to send the QoS parameters of the first service to a unified data repository network element.

Optionally, that the processing module 1401 generates the QoS parameters of the task based on the QoS parameters of the first service and the task information includes: generating a policy and charging control rule based on the QoS parameters of the first service and the task information, where the policy and charging control rule includes the QoS parameters of the task and a mapping relationship between the QoS parameters of the task and at least one of a task data flow or an execution network element that executes the task.

Optionally, the transceiver module 1402 is further configured to send the QoS parameters of the task to an anchor network element, where the QoS parameters of the task are used by the anchor network element to generate resource-level QoS parameters, where the resource-level QoS parameters include a parameter in at least one of the following dimensions: a connection dimension, a computing dimension, a data dimension, and an algorithm dimension.

For example, the communication apparatus 1400 is the anchor network element in the foregoing embodiments. In a possible implementation:
the transceiver module 1402 is configured to obtain QoS parameters of a task; the processing module 1401 is configured to generate resource-level QoS parameters based on the QoS parameters of the task and an execution network element that executes the task, where the resource-level QoS parameters include a parameter in at least one of the following dimensions: a connection dimension, a computing dimension, a data dimension, and an algorithm dimension; and the transceiver module 1402 is further configured to send the resource-level QoS parameters to the execution network element.

Optionally, the transceiver module 1402 is further configured to obtain an orchestration result of the task, where the orchestration result includes template description information and a dependency relationship of the task. The processing module 1401 is further configured to obtain task information based on the orchestration result, where the task information includes at least one of the following: deployment information or topology information of the task.

Optionally, the transceiver module 1402 is further configured to send the task information to a policy control function network element, where the task information is used by the policy control function network element to generate the QoS parameters of the task.

Optionally, that the transceiver module 1402 obtains the QoS parameters of the task includes: obtaining a policy and charging control rule, where the policy and charging control rule includes the QoS parameters of the task and a mapping relationship between the QoS parameters of the task and at least one of a task data flow or the execution network element that executes the task.

Optionally, the transceiver module 1402 is further configured to receive notification information from the execution network element, where the notification information is used to notify that the execution network element fails to meet a connection-, computing-, data-, or algorithm-related QoS requirement.

For example, the communication apparatus 1400 is the execution network element in the foregoing embodiments. In a possible implementation:
the transceiver module 1402 is configured to obtain resource-level QoS parameters, where the resource-level QoS parameters include a parameter in at least one of the following dimensions: a connection dimension, a computing dimension, a data dimension, or an algorithm dimension; and the processing module 1401 is configured to execute a task based on the resource-level QoS parameters.

Optionally, the transceiver module 1402 is further configured to send notification information to an anchor network element, where the notification information is used to notify that the execution network element fails to meet a connection-, computing-, data-, or algorithm-related QoS requirement.

For example, the communication apparatus 1400 is the task orchestration network element in the foregoing embodiments. In a possible implementation:
the transceiver module 1402 is configured to obtain QoS parameters of a first service; and the processing module 1401 is configured to perform task orchestration based on the QoS parameters of the first service, to obtain an orchestration result at a task granularity, where the orchestration result includes template description information and a dependency relationship of a task obtained by decomposing and mapping the first service.

The transceiver module 1402 is configured to obtain QoS parameters of a first service; and the processing module 1401 is configured to perform task orchestration based on the QoS parameters of the first service, to obtain an orchestration result at a task granularity, where the orchestration result includes template description information and a dependency relationship of a task obtained by decomposing and mapping the first service.

Optionally, the transceiver module 1402 is further configured to send the orchestration result to an anchor network element, where the orchestration result is used by the anchor network element to obtain task information, and the task information includes at least one of the following: deployment information or topology information of the task.

Optionally, that the transceiver module 1402 obtains the QoS parameters of the first service includes: obtaining a QoS template corresponding to the first service, where the QoS template includes a mapping relationship between the QoS parameters of the first service and identification information of the first service.

Optionally, that the transceiver module 1402 obtains the QoS parameters of the first service includes: obtaining QoS parameters of a first priority of the first service. That the processing module 1401 performs task orchestration based on the QoS parameters of the first service includes: performing task orchestration based on the QoS parameters of the first priority. If orchestration performed based on the QoS parameters of the first priority fails, the transceiver module 1402 is further configured to obtain QoS parameters of a second priority of the first service, and the processing module 1401 is further configured to perform task orchestration based on the QoS parameters of the second priority.

All related content of the steps in the foregoing method embodiments may be cited in function descriptions of the corresponding functional modules. Details are not described herein again.

Optionally, the module in FIG. 14 may also be referred to as a unit. For example, the processing module may be referred to as a processing unit, and the transceiver module may be referred to as a transceiver unit. In addition, in the embodiment shown in FIG. 14, names of the units may not be names shown in the figure. For example, the transceiver module may also be referred to as a communication module or a communication unit.

When each unit in FIG. 14 is implemented in a form of software functional module and sold or used as an independent product, the unit may be stored in a computer-readable storage medium. Based on such an understanding, the technical solutions in embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to perform all or some of the steps of the methods described in embodiments of this application. The storage medium that stores the computer software product includes any medium that can store program code, such as a USB flash drive, a removable hard disk, a read-only memory (read-only memory, ROM), a random access memory (random access memory, RAM), a magnetic disk, or an optical disc.

In this embodiment of this application, the communication apparatus 1400 is presented in a form of functional modules obtained through division in an integrated manner. The "module" herein may be an application-specific integrated circuit (application-specific integrated circuit, ASIC), a circuit, a processor that executes one or more software programs or firmware programs, a memory, an integrated logic circuit, and/or another component that can provide the foregoing function.

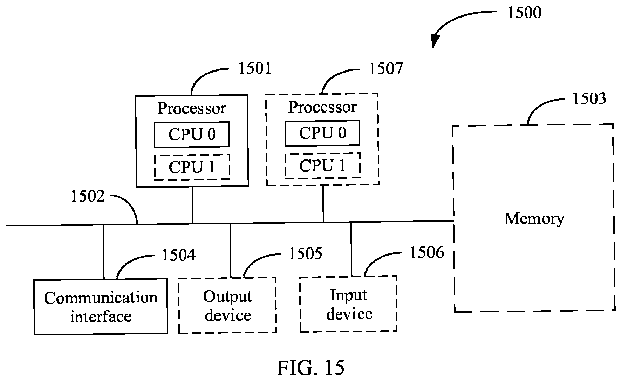

In a simple embodiment, a person skilled in the art may figure out that the communication apparatus 1400 may be in a form of a communication apparatus shown in FIG. 15.

As shown in FIG. 15, the communication apparatus 1500 includes one or more processors 1501, a communication line 1502, and at least one communication interface (in FIG. 15, only an example in which a communication interface 1504 and one processor 1501 are included is used for description). Optionally, a memory 1503 may be further included.

The processor 1501 may be a general-purpose central processing unit (central processing unit, CPU), a microprocessor, an ASIC, or one or more integrated circuits for controlling program execution of the solutions of this application.

The communication line 1502 may include a path for connecting different components.

The communication interface 1504 may be a transceiver module, configured to communicate with another device or a communication network like the Ethernet, a RAN, a terminal, or a wireless local area network (wireless local area network, WLAN). For example, the transceiver module may be an apparatus like a transceiver or a transceiver machine. Optionally, the communication interface 1504 may alternatively be a transceiver circuit or an input/output interface located in the processor 1501, and is configured to implement a signal input and a signal output of the processor.

The memory 1503 may be an apparatus having a storage function, for example, may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer, but is not limited thereto. The memory may exist independently, and is connected to the processor through the communication line 1502. Alternatively, the memory may be integrated with the processor.

The memory 1503 is configured to store computer-executable instructions for performing the solutions of this application, and the processor 1501 controls execution. The processor 1501 is configured to execute the computer-executable instructions stored in the memory 1503, to implement a communication method provided in embodiments of this application.

Alternatively, optionally, in this embodiment of this application, the processor 1501 may perform processing-related functions in the communication method provided in the following embodiments of this application, and the communication interface 1504 is responsible for communication with another device or a communication network. This is not specifically limited in embodiments of this application.

Optionally, the computer-executable instructions in this embodiment of this application may also be referred to as application program code. This is not specifically limited in embodiments of this application.

During specific implementation, in an embodiment, the processor 1501 may include one or more CPUs such as a CPU 0 and a CPU 1 in FIG. 15.

During specific implementation, in an embodiment, the communication apparatus 1500 may include a plurality of processors, for example, the processor 1501 and a processor 1507 in FIG. 15. Each of these processors may be a single-core (single-core) processor, or may be a multi-core (multi-core) processor. The processor herein may include but is not limited to at least one of the following various types of computing devices that run software: a CPU, a microprocessor, a digital signal processor (digital signal processor, DSP), a microcontroller unit (microcontroller unit, MCU), or an artificial intelligence processor, where each computing device may include one or more cores for executing software instructions to perform an operation or processing.

During specific implementation, in an embodiment, the communication apparatus 1500 may further include an output device 1505 and an input device 1506. The output device 1505 communicates with the processor 1501, and may display information in a plurality of manners. For example, the output device 1505 may be a liquid crystal display (liquid crystal display, LCD), a light emitting diode (light emitting diode, LED) display device, a cathode ray tube (cathode ray tube, CRT) display device, or a projector (projector). The input device 1506 communicates with the processor 1501, and may receive a user input in a plurality of manners. For example, the input device 1506 may be a mouse, a keyboard, a touchscreen device, or a sensing device.

The communication apparatus 1500 may also be referred to as a communication device sometimes, and may be a general-purpose device or a dedicated device. For example, the communication apparatus 1500 may be the terminal device, the access network device, or a device having a structure similar to that in FIG. 15. A type of the communication apparatus 1500 is not limited in embodiments of this application.

In addition, the composition structure shown in FIG. 15 does not constitute a limitation on the communication apparatus. In addition to the components shown in FIG. 15, the communication apparatus 1500 may include more or fewer components than those shown in the figure, or combine some components, or have different component arrangements.

Optionally, functions/implementation processes of the transceiver module 1402 and the processing module 1401 in FIG. 14 may be implemented by the processor 1501 in the communication apparatus 1500 shown in FIG. 15 by invoking computer-executable instructions stored in the memory 1503. Alternatively, the function/implementation process of the processing module 1401 in FIG. 14 may be implemented by the processor 1501 in the communication apparatus 1500 shown in FIG. 15 by invoking the computer-executable instructions stored in the memory 1503, and the function/implementation process of the transceiver module 1402 in FIG. 14 may be implemented by the communication interface 1504 in the communication apparatus 1500 shown in FIG. 15.

It should be understood that one or more of the modules or units may be implemented by software, hardware, or a combination thereof. When any one of the modules or units is implemented by software, the software exists in a form of computer program instructions, and is stored in a memory, and a processor may be configured to execute the program instructions and implement the foregoing method procedures. The processor may be built in an SoC or ASIC, or may be an independent semiconductor chip. In addition to a core that is configured to execute software instructions to perform an operation or processing, the processor may further include a necessary hardware accelerator, for example, an FPGA, a programmable logic device (programmable logic device, PLD), or a logic circuit that implements a dedicated logic operation.

When the foregoing module or unit is implemented by hardware, the hardware may be any one or any combination of a CPU, a microprocessor, a DSP chip, an MCU, an artificial intelligence processor, an ASIC, an SoC, an FPGA, a PLD, a dedicated digital circuit, a hardware accelerator, or a non-integrated discrete device, which may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the memory may not be in the communication apparatus. When the communication apparatus is a chip system, the communication apparatus may include a chip, or may include a chip and another discrete device. This is not specifically limited in embodiments of this application.

Optionally, an embodiment of this application further provides a computer-readable storage medium. The computer-readable storage medium stores a computer program or instructions. When the computer program or the instructions are run on a communication apparatus, the communication apparatus is enabled to perform the method according to any one of the foregoing method embodiments or any implementation thereof.

Optionally, an embodiment of this application further provides a communication system. The communication system includes the network device in the foregoing method embodiments and the terminal device in the foregoing method embodiments.

All or some of the foregoing embodiments may be implemented by software, hardware, firmware, or any combination thereof. When a software program is used for implementation, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of "a plurality of'. A single processor or another unit may implement several functions listed in the claims. Some measures are recorded in dependent claims that are different from each other, but this does not mean that these measures cannot be combined to produce better effect.

Although this application is described with reference to specific features and embodiments thereof, it is clear that various modifications and combinations may be made to them without departing from the scope of this application. Correspondingly, the specification and the accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A communication method, wherein the method comprises:
obtaining requirement information of a first service and task information, wherein the task information comprises related information of a task obtained by decomposing and mapping the first service;
generating quality of service QoS parameters of the first service based on the requirement information of the first service; and
generating QoS parameters of the task based on the QoS parameters of the first service and the task information.

2. The method according to claim 1, wherein obtaining the requirement information of the first service comprises:
obtaining related information of the first service, wherein the related information of the first service comprises one or more of the following: the requirement information of the first service or identification information of the first service, and there is a mapping relationship between the identification information of the first service and the requirement information of the first service.

3. The method according to claim 2, wherein the identification information of the first service comprises at least one of the following: information about a user that triggers the first service, information about a terminal device related to the first service, or information about an application service provider.

4. The method according to claim 2 or 3, wherein generating the QoS parameters of the first service based on the requirement information of the first service comprises:
generating, based on the related information of the first service, a QoS template corresponding to the first service, wherein the QoS template comprises a mapping relationship between the QoS parameters of the first service and the identification information of the first service.

5. The method according to any one of claims 1 to 4, wherein the QoS parameters of the first service comprise a plurality of sets of QoS parameters, and each set of QoS parameters has a different priority.

6. The method according to any one of claims 1 to 5, wherein the method further comprises:
sending the QoS parameters of the first service to a unified data repository network element.

7. The method according to any one of claims 1 to 6, wherein the task information comprises at least one of the following: deployment information or topology information of the task.

8. The method according to any one of claims 1 to 7, wherein generating the QoS parameters for the task based on the QoS parameters of the first service and the task information comprises:
generating a policy and charging control rule based on the QoS parameters of the first service and the task information, wherein the policy and charging control rule comprises the QoS parameters of the task and a mapping relationship between the QoS parameters of the task and at least one of a task data flow or an execution network element that executes the task.

9. The method according to claim 8, wherein the policy and charging control rule comprises at least one of the following: information about a connection-related specific QoS requirement, an identifier indicating the connection-related specific QoS requirement, information about an execution network element serving as a transmission start point of a service data flow of the task, information about an execution network element serving as a transmission end point of the service data flow of the task, information about a computing-related specific QoS requirement, an identifier indicating the computing-related specific QoS requirement, information about an execution network element for performing a computing function, an identifier of a computing subtask, a computing type of the computing subtask, information about a data-related specific QoS requirement, an identifier indicating the data-related specific QoS requirement, a data type, a data scale, information about an algorithm-related specific QoS requirement, an identifier indicating the algorithm-related specific QoS requirement, an algorithm type, an algorithm level, and an application manner.

10. The method according to claim 9, wherein the policy and charging control rule further comprises a type of the service data flow of the task, and the type of the service data flow comprises a computing type, a data type, or an algorithm type.

11. The method according to any one of claims 1 to 10, wherein the method further comprises:
sending the QoS parameters of the task to an anchor network element, wherein the QoS parameters of the task are used by the anchor network element to generate resource-level QoS parameters, and the resource-level QoS parameters comprise a parameter in at least one of the following dimensions: a connection dimension, a computing dimension, a data dimension, and an algorithm dimension.

12. A communication method, wherein the method comprises:
obtaining quality of service QoS parameters of a task;
generating resource-level QoS parameters based on the QoS parameters of the task and an execution network element that executes the task, wherein the resource-level QoS parameters comprise at least one of the following: a connection dimension, a computing dimension, a data dimension, and an algorithm dimension; and
sending the resource-level QoS parameters to the execution network element.

13. The method according to claim 12, wherein the task is obtained by decomposing and mapping a first service, and the QoS parameters of the task are obtained based on QoS parameters of the first service.

14. The method according to claim 12 or 13, wherein obtaining the quality of service QoS parameters of the task comprises:
obtaining a policy and charging control rule, wherein the policy and charging control rule comprises the QoS parameters of the task and a mapping relationship between the QoS parameters of the task and at least one of a task data flow or the execution network element that executes the task.

15. The method according to claim 14, wherein the policy and charging control rule comprises at least one of the following: information about a connection-related specific QoS requirement, an identifier indicating the connection-related specific QoS requirement, information about an execution network element serving as a transmission start point of a service data flow of the task, information about an execution network element serving as a transmission end point of the service data flow of the task, information about a computing-related specific QoS requirement, an identifier indicating the computing-related specific QoS requirement, information about an execution network element for performing a computing function, an identifier of a computing subtask, a computing type of the computing subtask, information about a data-related specific QoS requirement, an identifier indicating the data-related specific QoS requirement, a data type, a data scale, information about an algorithm-related specific QoS requirement, an identifier indicating the algorithm-related specific QoS requirement, an algorithm type, an algorithm level, and an application manner.

16. The method according to claim 15, wherein the policy and charging control rule further comprises a type of the service data flow of the task, and the type of the service data flow comprises a computing type, a data type, or an algorithm type.

17. The method according to claim 15 or 16, wherein QoS parameters in the connection dimension comprise at least one of the following: the information about the connection-related specific QoS requirement, the identifier indicating the connection-related specific QoS requirement, and a packet identification rule, wherein the packet identification rule is used to distinguish between service data flows corresponding to different QoS requirements; and/or
QoS parameters in the computing dimension comprise at least one of the following: the information about the computing-related specific QoS requirement, the identifier indicating the computing-related specific QoS requirement, and a computing subtask identification rule, wherein the computing subtask identification rule is used to distinguish between computing subtasks corresponding to different QoS requirements; and/or
QoS parameters in the data dimension comprise at least one of the following: the information about the data-related specific QoS requirement, the identifier indicating the data-related specific QoS requirement, and a data subtask identification rule, wherein the data subtask identification rule is used to distinguish between data subtasks corresponding to different QoS requirements; and/or
QoS parameters in the algorithm dimension comprise at least one of the following: the information about the algorithm-related specific QoS requirement, the identifier indicating the algorithm-related specific QoS requirement, and an algorithm subtask identification rule, wherein the algorithm subtask identification rule is used to distinguish between algorithm subtasks corresponding to different QoS requirements.

18. The method according to any one of claims 12 to 17, wherein the method further comprises:
receiving notification information from the execution network element, wherein the notification information is used to notify that the execution network element fails to meet a connection-, computing-, data-, or algorithm-related QoS requirement.

19. A communication method, wherein the method comprises:
obtaining resource-level quality of service QoS parameters, wherein the resource-level QoS parameters comprise a parameter in at least one of the following dimensions: a connection dimension, a computing dimension, a data dimension, or an algorithm dimension; and
executing a task based on the resource-level QoS parameters.

20. The method according to claim 19, wherein the resource-level QoS parameters are obtained based on QoS parameters of the task, the task is obtained by decomposing and mapping a first service, and the QoS parameters of the task are obtained based on QoS parameters of the first service.

21. The method according to claim 19 or 20, wherein QoS parameters in the connection dimension comprise at least one of the following: information about a connection-related specific QoS requirement, an identifier indicating the connection-related specific QoS requirement, and a packet identification rule, wherein the packet identification rule is used to distinguish between service data flows corresponding to different QoS requirements; and/or
QoS parameters in the computing dimension comprise at least one of the following: information about a computing-related specific QoS requirement, an identifier indicating the computing-related specific QoS requirement, and a computing subtask identification rule, wherein the computing subtask identification rule is used to distinguish between computing subtasks corresponding to different QoS requirements; and/or
QoS parameters in the data dimension comprise at least one of the following: information about a data-related specific QoS requirement, an identifier indicating the data-related specific QoS requirement, and a data subtask identification rule, wherein the data subtask identification rule is used to distinguish between data subtasks corresponding to different QoS requirements; and/or
QoS parameters in the algorithm dimension comprise at least one of the following: information about an algorithm-related specific QoS requirement, an identifier indicating the algorithm-related specific QoS requirement, and an algorithm subtask identification rule, wherein the algorithm subtask identification rule is used to distinguish between algorithm subtasks corresponding to different QoS requirements.

22. The method according to any one of claims 19 to 21, wherein the execution network element is a terminal device.

23. The method according to any one of claims 1 to 22, wherein the first service is an artificial intelligence AI service, a computing service, a data service, or a sensing service.

24. A communication method, wherein the method comprises:
obtaining quality of service QoS parameters of a first service; and
performing task orchestration based on the QoS parameters of the first service to obtain an orchestration result, wherein the orchestration result comprises template description information and a dependency relationship of a task obtained by decomposing and mapping the first service.

25. The method according to claim 24, wherein the method further comprises:
sending the orchestration result to an anchor network element, wherein the orchestration result is used by the anchor network element to obtain task information, and the task information comprises at least one of the following: deployment information or topology information of the task.

26. The method according to claim 24 or 25, wherein obtaining the QoS parameters of the first service comprises:
obtaining a QoS template corresponding to the first service, wherein the QoS template comprises a mapping relationship between the QoS parameters of the first service and identification information of the first service.

27. The method according to any one of claims 24 to 26, wherein the QoS parameters of the first service comprise a plurality of sets of QoS parameters, and each set of QoS parameters has a different priority.

28. The method according to any one of claims 24 to 27, wherein obtaining the QoS parameters of the first service and performing task orchestration based on the QoS parameters of the first service comprise:
obtaining QoS parameters of a first priority of the first service, and performing task orchestration based on the QoS parameters of the first priority.

29. The method according to claim 28, wherein the method further comprises:
when orchestration performed based on the QoS parameters of the first priority fails, obtaining QoS parameters of a second priority of the first service, and performing task orchestration based on the QoS parameters of the second priority.

30. A policy control function network element, wherein the policy control function network element comprises a module or a unit configured to perform the method according to any one of claims 1 to 11.

31. An anchor network element, wherein the anchor network element comprises a module or a unit configured to perform the method according to any one of claims 12 to 18.

32. An execution network element, wherein the execution network element comprises a module or a unit configured to perform the method according to any one of claims 19 to 23.

33. A task orchestration network element, wherein the task orchestration network element comprises a module or a unit configured to perform the method according to any one of claims 24 to 29.

34. A communication apparatus, wherein the communication apparatus comprises a processor, and the processor is configured to execute a computer program or instructions stored in a memory, to enable the communication apparatus to perform the method according to any one of claims 1 to 11, claims 12 to 18, claims 19 to 23, or claims 24 to 29.

35. A chip system, comprising a processor and an interface circuit, wherein
the interface circuit is configured to receive computer-executable instructions, and transmit the computer-executable instructions to the processor; and
the processor is configured to execute the computer-executable instructions, to enable the communication apparatus to perform the method according to any one of claims 1 to 11, claims 12 to 18, claims 19 to 23, or claims 24 to 29.

36. A computer-readable storage medium, wherein the computer-readable storage medium stores a computer program or instructions, and when the computer program or the instructions are executed by a computer, the computer is enabled to perform the method according to any one of claims 1 to 11, claims 12 to 18, claims 19 to 23, or claims 24 to 29.

37. A computer program product, wherein the computer program product comprises instructions, and when the instructions are run on a computer, the computer is enabled to perform the method according to any one of claims 1 to 11, claims 12 to 18, claims 19 to 23, or claims 24 to 29.

38. A communication system, wherein the communication system comprises a policy control function network element, an anchor network element, and an execution network element;
the policy control function network element is configured to: obtain requirement information of a first service and task information, generate quality of service QoS parameters for the first service based on the requirement information of the first service, generate QoS parameters for a task based on the QoS parameters of the first service and the task information, and send the QoS parameters of the task to the anchor network element, wherein the task information comprises related information of the task obtained by decomposing and mapping the first service;
the anchor network element is configured to: receive the QoS parameters of the task from the policy control function network element, generate resource-level QoS parameters based on the execution network element that executes the task, and send the resource-level QoS parameters to the execution network element, wherein the resource-level QoS parameters comprise at least one of the following: a connection dimension, a computing dimension, a data dimension, and an algorithm dimension; and
the execution network element is configured to: receive the resource-level QoS parameters from the anchor network element, and execute the task based on the resource-level QoS parameters.

39. The method according to claim 38, wherein the policy control function network element is further configured to perform the method according to any one of claims 2 to 11, the anchor network element is further configured to perform the method according to any one of claims 13 to 18, and the execution network element is further configured to perform the method according to any one of claims 20 to 23.

40. The method according to claim 38 or 39, wherein the communication system further comprises a task orchestration network element, and the task orchestration network element is configured to perform the method according to any one of claims 24 to 29.
